# EUROPEAN PATENT SPECIFICATION

(11) **EP 3 995 755 B1**
(45) Date of publication and mention of the grant of the patent: **21.08.2024**
(21) Application number: 19937300.2
(22) Date of filing: 30.12.2019
(51) Int. Cl.: F24H 9/20, G05B 15/02, F24D 19/10, F24H 15/152, F24H 15/421, G06Q 50/06, F24H 15/174

(54) **WATER HEATER AND HEATING CONTROL METHOD THEREFOR, AND COMPUTER-READABLE STORAGE MEDIUM**
WASSERERHITZER UND ERHITZUNGSSTEUERUNGSVERFAHREN DAFÜR UND COMPUTERLESBARES SPEICHERMEDIUM
CHAUFFE-EAU ET PROCÉDÉ DE COMMANDE DE CHAUFFAGE ASSOCIÉ, ET SUPPORT D'INFORMATIONS LISIBLE PAR ORDINATEUR

(30) Priority: 05.07.2019 CN 201910608058; 05.07.2019 CN 201910608056; 05.07.2019 CN 201910608472
(43) Date of publication of application: 11.05.2022
(73) Proprietor: Wuhu Midea Kitchen and Bath Appliances Mfg. Co., Ltd., Wuhu, Anhui 241009 (CN)
(72) Inventor: SHEN, Yongbing, Wuhu, Anhui 241009 (CN); XIE, Yaguang, Wuhu, Anhui 241009 (CN); WANG, Ming, Wuhu, Anhui 241009 (CN)
(74) Representative: RGTH
(86) International application number: PCT/CN2019/129850
(87) International publication number: WO 2021/004036

(56) References cited:
- CN-A- 105 066 460
- CN-A- 106 123 305
- CN-A- 106 123 352
- CN-A- 107 525 278
- CN-A- 108 006 988
- CN-A- 108 286 810
- CN-A- 108 286 816
- CN-A- 109 282 499
- CN-A- 110 398 065
- US-A1- 2012 055 419
- US-A1- 2013 051 777
- US-A1- 2016 010 878

## Description

### TECHNICAL FIELD

The present application relates to the field of water heaters, in particular to a water heater, a heating control method thereof and a computer-readable storage medium.

### BACKGROUND

Water heater has become a very popular household appliance.

When the water heater is in use, the temperature is set first, and when the heating device of the water heater heats the water in the inner container to the set temperature, the heating device is turned off. When the water in the inner container drops to a threshold value, the heating device is activated to reheat to make the water temperature in the inner container to the set temperature. The water heater circulates to heat the water in the inner container according to the above-mentioned mode, thus the hot water provided by the water heater for users is too little or too much, and the heating control of the water heater is unreasonable.
US 2013/051777 A1 discloses a hot water heater including a tank for storing water, one or more heating elements for selectively applying heat to the water in the tank, and a controller for controlling the heating elements, operative to automatically self-program control of the hot water heater to reduce energy consumption of the hot water heater based on usage data. The controller is operative to execute a learning algorithm that tracks usage data of the hot water heater based on one or more parameters.
US 2016/010878 A1 discloses monitoring water at each location in a building where hot water is used. With this approach, a controller can provide hot water at a temperature suitable for the intended use, e.g., warm water for a bath or shower, and much hotter water for a dishwasher. CN 108 286 816 A discloses an electric water heater and a control method thereof. The control method of the electric water heater comprises acquiring current position information and date information; acquiring local season information according to the current position information and date information; and heating water in the electric water heater to preset water temperature according to the season information.
CN 106 123 352 A regulating method of a water heater comprising the following steps: A plurality of time periods are selected in a natural day; water use relevant parameters in each time period are recorded; statistics is conducted on water use relevant parameters of the time periods in the first period of time; according to statistic results, a micro control unit automatically regulates the water use relevant parameters of the water heater in the current time period to water use relevant parameters of a time period, most approximate to the time period, on a previous date, and heating is conducted according to the water use relevant parameters.

### SUMMARY

The main object of the present application is to provide a water heater, a heating control method thereof and a computer-readable storage medium, aiming at solving the problem of unreasonable heating control of the water heater.

The invention is as defined in claims 1-13.

### BRIEF DESCRIPTION OF THE DRAWINGS

Fig. 1 is a schematic structural diagram of hardware of a water heater according to an embodiment of the present application.
Fig. 2 is a flowchart of an embodiment of a heating control method for a water heater of the present application.
Fig. 3 is a detailed flowchart for determining a water consumption probability of a user corresponding to a first time period in Step S 100 of Fig. 2.
Fig. 4 is a detailed flowchart of step S120 in Fig. 3.
Fig. 5 is another detailed flowchart for determining the water consumption probability of the user corresponding to the first time period in step S 100 of Fig. 2.

The realization of the purposes, functional features and advantages of the present application will be further explained with reference to the accompanying drawings in combination with the embodiments.

### DETAILED DESCRIPTION OF THE EMBODIMENTS

It should be understood that the specific embodiments described herein are intended to be explanatory only and are not intended to limit the present application.

A main solution of embodiments of the present application is: determining a water consumption probability of a user in a first time period, and determining a target water consumption amount according to the water consumption probability; determining a target operation parameter of a water heater according to the target water consumption amount; controlling the water heater to operate during and/or before the first time period according to the target operation parameter.

Since the water consumption probability of the user in the first time period can represent a probability of the user using water in this time period, the water heater can accurately determine the corresponding consumption amount of water of the user in this time period according to the water consumption probability, so that the water heater can provide a proper amount of hot water for the user, and avoid to provide too much or too little hot water, and the heating control of the water heater is reasonable.

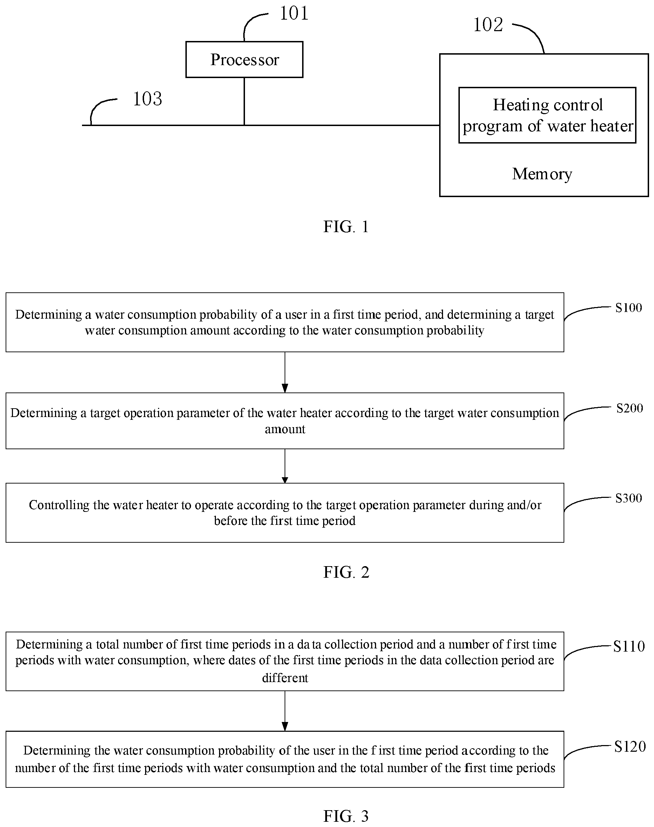

As an implementation, the water heater can be shown in Fig. 1.

This embodiment of the present application relates to a water heater, which comprises a processor 101 such as a CPU, a memory 102, and a communication bus 103. The communication bus 103 is configured to realize connection and communication between these components.

The memory 102 may be a high-speed RAM memory or a non-volatile memory such as a disk memory. As shown in Fig. 1, the memory 103, as a computer storage medium, can comprise a heating control program of the water heater. The processor 101 can be configured to invoke the heating control program of the water heater stored in the memory 102 and perform the following operations:

determining a water consumption probability of a user in a first time period, and determining a target water consumption amount according to the water consumption probability;

determining a target operation parameter of the water heater according to the target water consumption amount;

controlling the water heater to operate according to the target operation parameter during and/or before the first time period according to the target operation parameters.

Based on the hardware structure of the water heater, an embodiment of a heating control method for a water heater is provided.

Referring to Fig. 2, Fig. 2 is an embodiment of the heating control method for the water heater of the present application. The heating control method for the water heater comprises the following steps:
Step S100, determining a water consumption probability of a user corresponding to a first time period, and determining a target water consumption amount according to the water consumption probability.

In this embodiment, the water heater can determine the water consumption probability of a user in a certain time period, and the water consumption probability represents a probability of the user using the water heater in this time period, the higher the water consumption probability, the greater the probability of the user using the water heater in this time period. The water consumption probability corresponding to the first time period can be determined according to the times of water consumption of the user in the first time period. When the number of the first time periods on different dates is constant, the more times of water consumption there are, the greater the water consumption probability is.

The water heater determines the target water consumption amount of the user in the first time period according to the water consumption probability corresponding to the time period. Specifically, the water heater divides water consumption probabilities into a plurality of probability intervals, for example, five probability intervals: [100%, 85%], (85%, 70%), (75%, 55%), (55%, 40%), and (40%, 0%). Each probability interval corresponds to a water consumption level, for example, [100%, 85%] corresponds to a water consumption level 1, (85%, 70%) corresponds to a water consumption level 2, (75%, 55%) corresponds to a water consumption level 3, (55%, 40%) corresponds to a water consumption level 4, and (40%, 0%) corresponds to a water consumption level 5. Understandably, the higher the water consumption probability is, the lower the water consumption level will be. Each water consumption level has a corresponding consumption amount of water. After determining the water consumption probability, the water heater determines the probability interval where the water consumption probability lies, and then determines the water consumption level according to the probability interval, thereby taking the water consumption amount corresponding to the water consumption level as the target water consumption amount.
Step S200, determining a target operation parameter corresponding to the water heater according to the target water consumption amount;
Step S300, controlling the water heater to operate according to the target operation parameter during and/or before the first time period.

After the target water consumption amount is determined, the water heater can determine the target operation parameter of the water heater according to the target water consumption amount. The target operation parameter comprises at least one of a target set temperature, a parameter corresponding to an early heating time span, and a parameter corresponding to a heating mode of the water heater. Heating modes comprise a mode of keeping heating during water discharge and a mode of stopping heating during water discharge. Under different heating modes, the set temperatures of the water heater are different, and the early heating time spans are different. For example, the set temperature of the water heater in the mode of keeping heating during water discharge is greater than that in the mode of stopping heating during water discharge, and the mode of stopping heating during water discharge requires the water heater to heat in advance, while the mode of keeping heating during water discharge does not necessarily require the water heater to heat in advance. The parameter corresponding to the early heating time span can be a heating time span and a heating power of the water heater, and the parameter corresponding to the heating mode can be the start or stop of each heating device in the water heater.

When the target water consumption amount of the user is small, the water heater can adopt the mode of stopping heating during water discharge as the target heating mode. At this time, the water heater determines the set temperature according to the target water consumption amount, and then determines a heating rate of the heating device to the water, thereby determining the early heating time span according to the set temperature and the heating rate.

When the user's target water consumption amount is large, the water heater can adopt the mode of keeping heating during water discharge as the target heating mode. At this time, the water heater determines the set temperature according to the target water consumption amount and a temperature of inlet water to control the operation of the water heater.

It should be noted that when the target operation parameter comprises the early heating time span, the water heater determines an operation time point of the water heater according to the early heating time span, and controls the water heater to start when the current time point reaches the operation time point, thus realizing the operation of the water heater according to the target operation parameter before the first time period. When the target operation parameter does not comprise the early heating time span, the water heater is operated within the first time period, or may be operated in advance before the first time period, or may be operated in advance before and within the first time period according to the target operation parameter.

In the technical solution provided by the embodiment, the water heater determines the water consumption probability of the user in the first time period, determines the target water consumption amount of the user in the first time period according to the water consumption probability, so that the water heater determines the target operation parameter of the water heater according to the target water consumption amount, and then controls the water heater to operate according to the target operation parameter in the first time period, or controls the water heater to operate in advance according to the target operation parameter before the time period. Since the water consumption probability of the user in the first time period can represent the probability of the user using water in the time period, the water heater can accurately determine the corresponding water consumption amount of the user in this time period according to the water consumption probability, so that the water heater can provide a proper amount of hot water for the user, and avoid to provide too much or too little hot water, and the heating control of the water heater is reasonable.

Referring to Fig. 3, Fig. 3 is a detailed flowchart for determining the water consumption probability of the user in the first time period in Step S100 of Fig. 2, that is, Step S 100 comprises:
Step S 110, determining a total number of first time periods in a data collection period and a number of first time periods with water consumption, where each of the first time periods in the data collection period is on a different date;
Step S120, determining the water consumption probability of the user in the first time period according to the number of the first time periods with water consumption and the total number of the first time periods in the data collection period.

In this embodiment, the water heater is provided with a data collection period, and the data collection period may be the latest week, the latest two weeks, or the latest three weeks. The water heater determines the total number of identical first time periods on different dates in the data collection period. For example, when the time span of the data collection period is one week, the data collection period has seven first time periods from 9 am to 10 am, i.e. the total number of the first time periods is seven. When the water heater detects that the user uses the water heater, the water heater associates the time period in which the water heater is used with the water consumption of the user. Therefore, after obtaining the plurality of first time periods, the water heater determines the number of the first time periods with water consumption.

The water heater can determine the water consumption probability based on the number of the first time periods with water consumption and the total number of the first time periods. For example, the water heater stores a mapping relationship between the numbers of the first time periods with water consumption, the total numbers of the first time periods and the water consumption probabilities. After determining the total number of the first time periods and the number of the first time periods with water consumption, the water heater can determine the water consumption probability according to the mapping relationship, the total number of the first time periods and the number of the first time periods with water consumption.

In the technical solution provided by this embodiment, the water heater determines the total number of the first time periods on different dates in the data collection period and the number of the first time periods with water consumption, and determines the water consumption probability according to the total number of the first time periods and the number of the first time periods with water consumption, the water heater can accurately determine the target water consumption amount of the user in the first time period according to the water consumption probability.

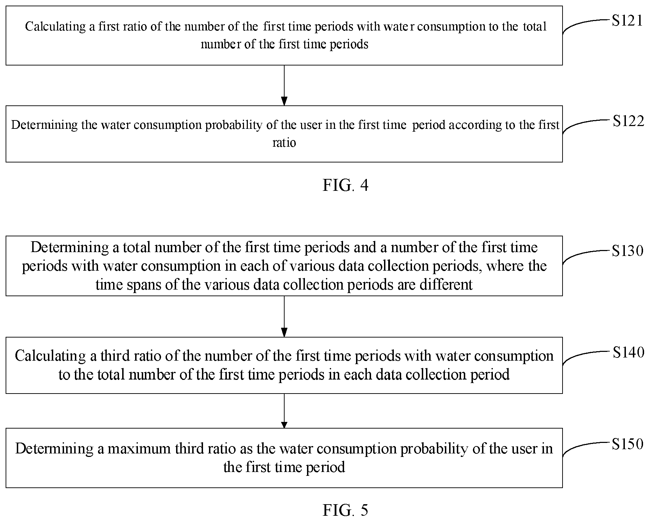

Referring to Fig. 4, Fig. 4 is a detailed flowchart of Step S120 in Fig. 3, Step S120 comprises:
Step S121, calculating a first ratio of the number of the first time periods with water consumption to the total number of the first time periods;
Step S122, determining the water consumption probability of the user in the first time period according to the first ratio.

In the present embodiment, the water heater calculates the first ratio of the number of the first time periods with water consumption to the total number of the first time periods, the first ratio representing the frequency of the user's water consumption in the first time periods, the larger the first ratio, the higher the frequency of the user's water consumption in the first time periods. In this regard, the first ratio can be directly used as the water consumption probability, which is used to represent the water consumption probability of the user in this time period.

In an embodiment, the water heater divides a day into a plurality of time periods. After the user uses the water heater in one time period, the probability of the user using hot water in the next time period will be affected. For example, if the user takes a bath from 8:00 pm to 9:00 pm, the user will fall asleep, so the probabilities of the user using water will decrease from 9:00 pm to 10:00 pm, 10:00 pm to 11:00 pm, and 11:00 pm to 12:00 pm. Therefore, when calculating for 9:00 pm to 10:00 pm, it is necessary to consider the influence of the user using water before 9:00 pm to 10:00 pm.

In this regard, the water heater determines a second time period earlier than the first time period, the dates of the second time period are different from the dates of the first time period, and the second time period comprises one or more sub-time periods, for example, when the first time period is 1: 00 am to 2: 00 am, the second time period is 0: 00 am to 1: 00 am, and the second time period only contains one sub-time period, which is 0: 00 am to 1: 00am. If the first time period is 3: 00 am to 4: 00 am, then the second time period is 0: 00 am to 3: 00 am, and the second time period comprises three sub-time periods, which are 0: 00 am to 1: 00 am, 1: 00 am to 2: 00 am and 2: 00 am to 3: 00 am respectively.

The water heater calculates a total number of the sub-time periods and a number of sub-time periods with water consumption in the data collection period, thereby obtaining a second ratio based on the number of the sub-time periods with water consumption in the data collection period to the total number of the sub-time periods. If the second time period comprises a plurality of sub-time periods, there are a plurality of second ratios.

After obtaining the second ratio, corresponding weights are set for each sub-time period and the first time period. Since the earlier sub-time period has less influence on the first time period, the earlier time period has a lighter weight, that is, the first time period has the largest weight. The water heater carries out weight calculation on each second ratio and the first ratio to obtain the target ratio, and the target ratio is the water consumption probability of the user in the first time period.

In the technical solution provided by this embodiment, the water heater accurately determines the water consumption probability of the user in the first time period according to the influence of the second time period earlier than the first time period on the first time period.

Referring to Fig. 5, Fig. 5 is another detailed flowchart for determining the water consumption probability of the user in the first time period in Step S100 of Fig. 2, Step S100 comprises:
Step S130, determining a total number of the first time periods in each of various data collection periods and a number of the first time periods with water consumption in each of the various data collection periods, where each of the various data collection periods has a different time span;
Step S140, calculating a third ratio of the number of the first time periods with water consumption to the total number in each of the various data collection periods to the first time periods in each data collection period;
Step S150, determining a maximum third ratio as the water consumption probability of the user in the first time period.

In this embodiment, the number of the historical water consumption times of the user using the water heater in a certain period of time is large, the number of the historical water consumption times of the user using the water heater in another period of time is small, and the user consumes water for many times in a period of time are taken as one historical water consumption time, for example, the user was on business in a certain week, so the water heater does not have water consumption parameters for this week. At this time, when the water heater carries out the statistics on water consumption probability, the water consumption probability of the user in this time period is inaccurate due to that the user was on business, that is, the water consumption probability of the user in this time period is less than the actual water consumption probability.

In this regard, the water heater is provided with multiple data collection periods, and the time spans of the data collection periods are different from each other, for example, the time spans are one week, two weeks, three weeks, etc. The last days of the data collection periods are the current day. Understandably, the data collected in the data collection periods are updated with the passage of time, For example, for a one-week data collection period, if the date of the first time period is June 8, the earliest day of the data collection period time is June 1, when the date of the first time period is changed to June 9, then the earliest day of the data collection period time is updated to June 2, that is, the water heater uses the collected water consumption parameters on June 9 to replace those collected on June 1.

The water heater sequentially calculates the total number of the first time periods and the number of the first time periods with water consumption in each data collection period, and divides the number of the first time periods with water consumption by the total number of the first time periods to obtain the third ratio corresponding to the data collection period. Therefore, the water heater calculates a plurality of third ratios, and then takes the largest third ratio as the water consumption probability of the user in the first time period.

In this embodiment, by setting a plurality of data collection periods, the corresponding water consumption probability of the user in each data collection period is sequentially calculated, and the maximum water consumption probability is taken as the water consumption probability of the user in the first time period, thereby eliminating the problem that the water consumption probability determined by the water heater is inaccurate due to the user going out.

According to the invention, the water heater determines a current water consumption level according to the water consumption probability of the user in the first time period, thereby determining the target water consumption amount of the user in the first time period according to the current water consumption level.

Specifically, when the water consumption level is level 1 or level 2, the water heater can accurately determine the target water consumption amount of users in this time period. Therefore, the water heater takes the data collection period with the maximum water consumption probability as the target data collection period, so that the maximum water consumption of the user in the first time period of the target data collection period is determined as the water consumption amount corresponding to the water consumption levels 1 or 2.

When the water consumption level of the user in the first time period is level 3, the water heater can accurately determine the water consumption amount of the user in this time period. In this regard, the maximum water consumption of the user in the first time period can be taken as the water consumption amount corresponding to the water consumption probability level 3.

When the user's water consumption level in the first time period is level 4, the water consumption amount of the user in this time period cannot be accurately determined by the water heater. In this regard, the water consumption amount corresponding to the water consumption level 3 is added with a preset amount of water, and the preset amount of water is a redundancy, thereby obtaining the water consumption amount corresponding to the water consumption level 4.

When the water consumption level is level 5, the water heater can hardly determine the water consumption amount of the user in the first time period, but the user still have the possibility of using water. Therefore, the water consumption amount corresponding to the water consumption level 5 can be obtained by adding a preset amount of water to the water consumption amount of the user corresponding to the water consumption level 5.

The water consumption amounts corresponding to the water consumption levels are only exemplified above, and the water heater can be appropriately modified according to the actual water consumption situation of the user in the first time period.

After determining that the current water consumption level is a preset level, the historical maximum water consumption amount of the user in the first time period is determined as the target water consumption amount;
after determining that the current water consumption level is lower than the preset level, the maximum water consumption of the user in the first time period in the target data collection period is determined as the target water consumption amount, the water consumption probability of the first time period in the target data collection period is higher than the water consumption probabilities of the first time period of other data collection periods;
after determining that the current water consumption level is higher than the preset level, the water consumption amount of the target water consumption level is increased and then taken as the target water consumption amount, where the target water consumption level is lower than the current water consumption level by one level. For example, when the current water consumption level is level 4, the target water consumption level is level 3.

In an embodiment, the water heater can also collect a temperature of water of a middle portion to control operation of a corresponding heating device of the water heater according to the temperature of water of the middle portion. Specifically, the water heater comprises a bottom heating device and a middle heating device. The water heater can compare the temperature of water in the middle of the inner container with a preset temperature. If the temperature of water in the middle of the inner container is lower than or equal to the preset temperature, it indicates that the temperature of water at the top of the water heater may also be lower than the preset temperature. Therefore, the heating device at the bottom of the inner container is controlled to operate. The top and bottom of the water heater are equipped with heating devices, but the higher the temperature is, the smaller the density will be, that is, the water with high temperature is located at the top of the water heater. At this time, if the heating device at the top of the inner container is controlled to operate, the hot water at the top has a low heating rate for the water in the middle because of the low density of the water at the top. In this regard, the water heater controls the heating device at the bottom of the inner container to operate, the heating device heats the water at the bottom of the inner container, and the water heated at the bottom moves up, so that the cold water at the middle and the top moves down to the bottom and the middle, that is, the water heater controls the heating device at the bottom to heat the water at all parts of the inner container. When the temperature of water in the middle of the inner container is greater than the preset temperature, it means that the temperature of water at the top of the inner container is high, which can meet the temperature demand of the user for hot water, and there is no need to control the heating devices at the bottom and the top to operate. The water heater determines the preset temperature of the water heater according to the customary water consumption amount of the user in the current time period, and then compares the preset temperature with the relatively stable temperature of water at the middle of the inner container. When the temperature of water at the middle is less than or equal to the preset temperature, the heating device at the bottom of the inner container is started to heat all the water of the inner container.

When the temperature of water at the middle of the inner container is greater than the preset temperature, the water heater further judges whether the water heater is in a water discharge state. If the water heater is in the water discharge state, and the water heater is discharging hot water, the water heater outputs hot water, and cold water will inevitably enter the inner container. In order to ensure that the water heater can output the hot water stably, the water heater can control the heating device at the top of the inner container to operate. If the temperature of water at the middle of the inner container is higher than the preset temperature, it indicates that the temperature of water at the top of the inner container is also higher than the preset temperature, and the hot water output from the water heater can meet the requirement of the user for temperature of water. However, with the continuous output of hot water from the water heater, the temperature of the outputting hot water will gradually decrease. Since the heating rate of the bottom heating device to the water at the top of the inner container is less than that of the top heating device to the water at the top of the inner container, the top heating device can be controlled to operate, so that the temperature of the hot water outputting from the water heater is higher, that is, the hot water outputting from the water heater can meet the temperature requirement of the user.

In one embodiment, the inner container of the water heater is provided with a plurality of heating devices. At an initial stage of discharging of the water heater, the temperature of water at the top drops slightly. If the heating devices run, the temperature of water at the top will rise, which will cause a temperature limiter to turn off the heating devices and make the water heaters stop running. That is, with the time of discharging of the water heater increases, the heat to the top of the inner container will gradually decreases. At the initial stage of discharging water from the water heater, the bottom heating device at the bottom of the inner container and the middle heating device at the middle of the inner container give limited help to the heating of water at the top, and the heat to the top of the inner container is less. Therefore, the water heater controls the top heating device with the maximum heating rate to the water at the top to operate at the initial stage of water discharge, so as to output more heat at the top of the inner container to the maximum extent. In this regard, when the water discharge of the water heater is detected, a first target heating device is determined according to the heating rate of each heating device to the water at the top of the inner container, where the first target heating device comprises at least a heating device with a maximum heating rate to the water at the top of the inner container; and the first target heating device is controlled to operate. A safe temperature is provided in the water heater, when the temperature of water at the top is lower than the safe temperature and the difference between the temperature of water at the top and the safe temperature is larger, the first target heating device composed of the top heating device and the middle heating device with larger heating rates for the water at the top water can be controlled to operate; when the temperature of water at the top is lower than the safe temperature and the difference between the temperature of water at the top and the safe temperature is smaller, the first target heating device composed of the top heating device and the bottom heating device with smaller heating rates for the water at the top is controlled to operate.

The safe temperature can be less than a limited temperature corresponding to the temperature limiter. After the first target heating device is operated, the water heater obtains a current temperature of water at the top of the inner container in real time. When the current temperature of water at the top is greater than the safe temperature, it indicates that the temperature of water at the top is too high. If the first target heating device continues heating, the temperature limiter will turn off the heating device.

For this, the water heater determines a second target heating device that heats the water at the top at a rate less than that of the first target heating device heating the water at the top. When the first target heating device comprises the top heating device and one of the middle heating device and the bottom heating device, the second target heating device comprises the top heating device, or the second target heating device comprises the middle heating device and the bottom heating device.

After determining the second target heating device, the first target heating device is controlled to stop, and the second target heating device is controlled to start.

Furthermore, if the current temperature of water at the top is greater than the safe temperature after the second target heating device is operated for a period of time, it indicates that the temperature of water at the top is too high, and if the second target heating device continuously operates, the temperature limiter will turn off the heating device. For this, the water heater determines a third target heating device that heats the water at the top at a rate less than that of the second target heating device heating the water at the top. The second target heating device comprises the top heating device, or the second target heating device comprises the middle heating device and the bottom heating device, or the third target heating device comprises the bottom heating device. After determining the third target heating device, the second target heating device is controlled to stop, and the second target heating device is controlled to start.

By analogy, if the current temperature of water at the top is greater than the safe temperature after switching the target heating device for a period of time, the water heater will switch the current target heating device to a next target heating device, and the heating rate of the next target heating device to the water at the top is lower than the heating rate of the current target heating device to the water at the top.

After the first target heating device operates, the water heater can calculate an amount of heat output per unit time of the water heater. The output heat per unit time is equal to: (temperature of outlet water-temperature of inlet water) * flow rate * specific heat capacity * unit time, where the flow rate refers to a flow rate in an outlet pipe of the water heater, the temperature of the inlet water can be detected by a temperature sensor at the bottom of the inner container, and the temperature of the outlet water can be detected by a temperature sensor at the top of the inner container, and the specific heat capacity is a specific heat capacity of water.

The water heater calculates the heat generated per unit time by the first target heating device. Specifically, the heat generated per unit time is equal to: heating rate * capacity of the top of the inner container * specific heat capacity * unit time * coefficient, the first target heating device heats the water at the middle and the bottom, so the heat contributed by the first target heating device to the top is less than the actual heat, that is, the coefficient is less than 1. When the heat generated per unit time by the first target heating device is equal to or less than the heat output per unit time by the water heater, then the temperature of water at the top changes little, at this time, the first target heating device can be controlled to continuously operate. When the heat generated per unit time by the first target heating device is greater than the heat output per unit time by the water heater, the temperature of water at the top tends to rise. If a duration that the heat generated by the first target heating device per unit time is larger than the heat output by the water heater per unit time reaches a target duration, it indicates that the temperature of water at the top is too high. At this time, it needs to switch the first target heating device to the second target heating device.

In an embodiment, the water heater analyzes regularity of water consumption of the user based on the combination of the water consumption parameters associated with the time periods, and then realizes the intelligent function of the water heater according to the regularity of water consumption. Specifically, the water heater determines the required amount of water corresponding to the current time period, where the required amount of water is determined according to the water consumption probability, determines a target preset temperature of the water heater according to the required amount of water, and controls the heating device of the water heater to operate according to the target preset temperature.

Specifically, the water heater is provided with a data collection period, the time span of the data collection period can be one week, two weeks, three weeks, or the like. When the water heater detects that water is discharging, that is, when the user uses the water heater, the water consumption parameter of the water heater will be collected, where the water consumption parameter comprises an amount of hot water of the water heater consumed by the user, and the water heater is associated with the time periods for storage, so as to establish a database of water consumption parameters and time periods corresponding to the data collection period. The water heater can determine the user's required amount of water in any time period according to the database corresponding to the data collection period, the time period refers to a certain time period of a day.

The water heater obtains each time period in the data collection period, and the each of the time periods is on a different date. For example, if the data collection period is 7 days, there are 7 time periods [9:00, 10:00]. The water heater determines the time periods associated with a water consumption parameter, and counts a number of the time periods, the number can be regarded as the number of times a user uses water in the time periods. The water heater calculates the ratio of the number of times with water consumption and the total number of the time periods, defines the ratio as the water consumption probability, and determines an interval where the water consumption probability lies, each interval corresponding to a water consumption amount. For example, the water heater divides the water consumption probabilities into probability intervals, such as [100%, 85%], (85%, 70%), (75%, 55%), (55%, 40%), and (40%, 0%). Each probability interval corresponds to a water consumption level, for example, [100%, 85%] corresponds to a water consumption level 1, (85%, 70%) corresponds to a water consumption level 2, (75%, 55%) corresponds to a water consumption level 3, (55%, 40%) corresponds to a water consumption level 4, and (40%, 0%) corresponds to a water consumption level 5. Understandably, the higher a water consumption probability is, the lower a water consumption level will be. Each water consumption level has a corresponding water consumption amount. After determining the water consumption probability, the water heater determines the probability interval where the water consumption probability lies, and then determines the water consumption level according to the probability interval, thereby taking the water consumption amount corresponding to the water consumption level as the required amount of water.

When the water consumption level is level 1 or level 2, the water heater can accurately determine the target water consumption amount of the user in this time period. Therefore, the water heater divides the water consumption amounts associated with each first time period into different water consumption intervals, and takes an upper limit value of the water consumption interval containing the largest amount of water consumption as the water consumption amount corresponding to the water consumption level 1 or 2.

When the water consumption level of the user is level 3 in the first time period, the water heater can accurately determine the water consumption amount of the user in this time period. In this regard, the maximum water consumption amount of the user in the first time period can be taken as the water consumption amount corresponding to the water consumption level 3.

When the user's water consumption level is level 4 in the first time period, the water consumption amount of the user in the time period cannot be accurately determined by the water heater. In this regard, the water consumption amount corresponding to the water consumption level 3 is added with a preset amount of water, and the preset amount of water is the redundancy, thus obtaining the water consumption amount corresponding to the water consumption level 4.

When the water consumption level is level 5, the water heater can hardly determine the water consumption amount of the user in the first time period, but the user still have the possibility of using water. Therefore, the water consumption amount corresponding to the water consumption level 5 can be obtained by adding a preset amount of water to the water consumption amount of the user corresponding to the water consumption level 5.

The water heater can determine the required amount of water of the user in the current time period according to the water consumption level.

After the required amount of water is determined, the target preset temperature of the water heater can be determined according to the required amount of water, that is, after the water heater controls the heating device to operate according to the target preset temperature, the amount of the hot water provided by the water heater in the current time period is greater than or equal to the required amount of water of the user in the current time period. The water heater stores a mapping relationship between set temperatures and required amounts of water, thereby the set temperature can be determined according to the required amount of water.

It should be noted that, under normal circumstances, the water heater sets the temperature of inlet water to be low, and the temperature of the inlet water is regarded as a constant, so the preset temperature can be determined only according to the required amount of water. But in practice, the temperature of the inlet water of the water heater may be high, if the set temperature of the water heater is determined according to the required amount of the water, the actual amount of hot water that can be output by the water heater is larger or far larger than the required amount of water of the user, resulting in the waste of energy of the water heater. For this reason, the required amount of water and the temperature of the inlet water of the water heater when the user of the water heater uses the water heater in the current time period or the current temperature of the inlet water of the water heater determine the target set temperature.

The water heater is provided with a plurality of water discharge modes, comprising the mode of stopping heating during water discharge, the mode of keeping heating during water discharge and a capacity increasing mode. The water heater has corresponding maximum hot water output amounts in different discharge modes. Specifically, the water heater divides temperatures of the inlet water from 5°C to 40°C into N sections, divides temperatures of the outlet water from 35°C to 45°C into N sections and divides the set temperatures from 35°C to 80°C into N sections, when the temperature of the outlet water is between 35°C and 45°C, the water heater outputs hot water. Under different heating modes, the water heater sets different temperatures of the inlet water and different set temperatures, and collects the output amount of the outlet water having temperature between 35°C to 45°C. This output amount is the maximum hot water output amount corresponding to the water discharge mode. The water heater constructs a mapping table according to data relationships among maximum hot water output amounts, temperatures of inlet water, set temperatures and water discharge modes. The water heater can find a maximum hot water output amount in the mapping table only according to a water discharge mode, a temperature of the inlet water and a set temperature. It should be noted that the set temperature used by the water heater to determine the maximum hot water output amount refers to the current set temperature corresponding to the current time period of the water heater.

After determining the maximum hot water output corresponding to each water discharge mode, the water heater compares the required amount of water with the maximum hot water outputs, and takes a discharge mode corresponding to a maximum hot water output amount larger than the required amount of water as the target water discharge mode. The water heater searches for a set temperature in the mapping table according to the target water discharge mode, the maximum hot water output corresponding to the target water discharge mode and the temperature of the inlet water, and the set temperature is the target set temperature.

All water discharge modes whose maximum hot water output amount are larger than the required amount of water of the user can be taken as the target water discharge mode. However, when a difference between a maximum hot water output amount and the required amount of water is large, it indicates that the water heater provides more hot water and wastes more energy. Therefore, the water heater first judges whether the water discharge mode with smaller maximum hot water output amount is the target water discharge mode, and then judges whether the water discharge mode with larger maximum hot water output amount is the target water discharge mode, so that the water heater will not provide too much hot water for the user.

The maximum hot water output amount of the water heater under the mode of stopping heating during water discharge is the smallest, so the water heater first judges whether the maximum hot water output amount corresponding to the mode of stopping heating during water discharge is greater than the required amount of water, if so, the mode of stopping heating during water discharge is taken as the target water discharge mode.

If the maximum hot water output amount corresponding to the mode of stopping heating during water discharge is less than or equal to the required amount of water of the user, the water heater judges whether the maximum hot water output amount corresponding to the mode of keeping heating during water discharge is greater than the required amount of water. The maximum hot water output amount corresponding to the mode of keeping heating during water discharge is greater than that corresponding to the mode of stopping heating during water discharge. If the maximum hot water output amount corresponding to the mode of keeping heating during water discharge is greater than the required amount of water, the mode of keeping heating during water discharge is taken as the target water discharge mode.

If the maximum hot water output amount corresponding to the mode of keeping heating during water discharge is less than or equal to the required amount of water of the user, The water heater takes the capacity increasing mode as the target water discharge mode. The maximum hot water output amount corresponding to the capacity increasing mode is the largest among the three water discharge modes. The capacity increasing mode refers to that the water heater increases the hot water output amount with other means. For example, a standby heating device is set in the inner container of the water heater, when the water heater enters the capacity increasing mode, the standby heating device is started.

When the water heater is in a state of water discharge, that is, when the water heater is used by the user, the water heater has already output a portion of the hot water. At this time, the set temperature of the hot water needs to be re-determined, so that the total of the remaining output of the hot water from the water heater and the amount of the hot water already output are equal to or slightly greater than the required amount of water of the user.

In this regard, when the water heater is in the state of water discharge, the water heater detects the output amount of hot water of the water heater in real time. The output amount of hot water is the output amount of hot water has already been output. The water heater calculates the difference between the required amount of water and the output amount of hot water. The difference is the remaining water consumption amount, The water heater collects and detects the temperature of inlet water through a temperature sensor arranged at the bottom of the inner container, The set temperature is searched in the mapping relation table according to the inlet water temperature, the remaining water consumption amount and the target water discharge mode determined by the water heater, and the set temperature is the current set temperature of the water heater. The water heater controls the heating device according to the current set temperature, so that the energy waste of the water heater is less.

In an embodiment, the water heater analyzes the regularity of water consumption of the user based on the combination of the water consumption parameters associated with the time periods, and then realizes the smart function of the water heater according to the regularity of water consumption. For example, the water heater acquires a first water consumption parameter of the user in the first time period, where the first water consumption parameter comprises a first water consumption amount and a first water consumption temperature, determines the target early heating time span corresponding to the first time period of the water heater, according to the first water consumption parameter and the heating power of the water heater, and controls the heating device of the water heater to operate according to the target early heating time span.

Specifically, the first water consumption parameter comprises the first water consumption amount, and the first water consumption parameter can also comprise the first water consumption temperature, where the first water consumption temperature is the temperature of hot water required by the user in the first time period, the first water consumption temperature can be determined according to the customary water consumption temperature of the user in the first time period.

Specifically, the first water temperature can be regarded as hot water, that is, the first water temperature can be regarded as a temperature defining hot water, and the first water temperature can be any temperature from 35°C to 45°C. After the first water consumption parameter is determined, the target set temperature of the water heater can be determined according to the first water consumption parameter, that is, after the water heater controls the heating device to operate according to the target preset temperature, the amount of the hot water provided by the water heater in the first time period is greater than or equal to required amount of the hot water of the user in the current time period. The water heater stores a mapping relationship among set temperatures, first water consumption amounts and first water consumption temperatures, thereby the set temperature can be determined based on the first water consumption amount and the first water consumption temperature. It should be noted that, under normal circumstances, the water heater sets the temperature of the inlet water to be low, and the temperature of the inlet water is regarded as a constant. Therefore, the set temperature can be determined only according to the water consumption amount and the water consumption temperature. But in practice, the temperature of the inlet water of the water heater may be high. If the set temperature of the water heater is determined according to the water consumption amount, the actual output amount of the hot water that can be output by the water heater is larger or far larger than the water consumption amount of the user, resulting in energy waste of the water heater. For this reason, the temperature of the inlet water of the water heater when the user of the water heater uses the water heater in the current time period or the current temperature of the inlet water of the water heater and the required amount of water determine the target preset temperature.

Because the water heater is heated in advance, it can be regarded as that no water is inputting to the water heater, and the water heater obtains the temperature of water in the inner container, which can be an average temperature of water in the inner container. Temperature sensors are arranged at the bottom and the top of the inner container, and an average value of temperatures of water detected by the two temperature sensors is the temperature of water of the inner container. Of course, the inner container can also be provided with a plurality of temperature sensors, and the average temperature of water corresponding to the temperatures of water collected by the plurality of temperature sensors is the temperature of water of the inner container.

When the target preset temperature, the heating rate of the heating device to the water and the temperature of water in the inner container are determined, the early heating time span of the water heater can be calculated, and the early heating time span can be set as the target early heating time span.

After the water heater calculates the target early heating time span, the water heater can obtain a starting time point of the heating device according to a starting time point of the first time period and the target early heating time span, and then control the heating device to operate when the current time point reaches the starting time point. It should be noted that multiple heating devices, such as two or three, can be provided in the water heater. When the water heater runs in advance, the water heater needs to control each heating device to operate.

The water heater firstly determines the early heating time spans corresponding to the first time period and the second time period, where the second time period comes after the first time period.

The water heater then calculates a first interval between a start time point of the first time period and a start time point of the second time period, if the first interval is longer than or equal to the second early heating time span, it indicates that the water consumption amount of the user in the second time period will affect the water consumption amount of the user in the first time period, the water heater calculates the first water consumption amount corresponding to the first time period and a third water consumption parameter corresponding to the second time period. The third water consumption parameter comprises a total water consumption amount of the first time period and the second time period, or the total water consumption amount and temperatures of water, the temperatures of water are the temperatures of water of the user in the first time period and the second time period, and the target early heating time span corresponding to the first time period is determined according to the third water consumption parameter, so that the water heater can provide sufficient hot water for the user in the first time period and the second time period.

When the first interval is shorten than the second early heating time span, it indicates that the user's water consumption amount in the second time period will not affect the user's water consumption amount in the first time period. At this time, the early heating time span corresponding to the first time period is taken as the target early heating time span.

When the first interval is longer than the early heating time span corresponding to the second time period, the water heater will determine the target early heating time span of the first time period according to the first water consumption parameter and the second water consumption parameter, that is, the target early heating time span of the second time period is actually the first interval plus the target early heating time span corresponding to the first time period, and there is no need to repeatedly determine the target early heating time span of the second time period. In this regard, when the water heater determines the target early heating time span of the first time period, it is necessary to determine whether the water heater simultaneously determines the target heating time spans corresponding to the first time period and a third time period immediately before the first time period. In this regard, the water heater calculates a second interval between the start time point of the third time period and the start time point of the first time period, if the second interval is longer than the early heating time span of the first time period, it can be determined that the water heater does not determine the target early heating time span of the first time period in advance, and the target early heating time span of the first time period needs to be determined. When the second interval is less than or equal to the early heating time span of the first time period, it can be determined that the water heater determines the target early heating time span of the first time period in advance, the water heater can determine the target early heating time span of the first time period according to the target early heating time span of the third time period, namely, adding the target early heating time span of the third time period with the second interval is the target early heating time span of the first time period.

In an embodiment, the water heater analyzes the regularity of water consumption of the user based on the combination of the water consumption parameters associated with the time periods, and then realizes the intelligent function of the water heater according to the regularity of water consumption. For example, the water heater acquires a first total number of first time periods within a current data collection period, where the first time periods belongs to different dates, divides the first total number of the first time periods into a plurality of calculation sets according to different preset interval days, calculates a first water consumption probability for each calculation set, determines whether the current data collection period is valid based on first water consumption probabilities of the plurality of calculation sets.

Specifically, the water heater can collect the water consumption parameters of the user using the water heater, and learn by itself according to the water consumption parameters, so as to analyze the user's regularity of using the water heater. The regularity of using is the user's regularity of water consumption, which refers to the user's need for water in a certain period of time or does not need water in a certain period of time.

The user uses water in a time period of a certain day, but does not use water in this time period of the next day, that is, the user's water consumption fluctuates in the first time period. If the fluctuation is large, it can indicate that the user does not have regularity of water consumption in this time period, that is, the data collection period is invalid at this time period.

Specifically, the water heater needs to judge whether a certain time period in the data collection period is valid first. If it is valid, it indicates that the user's water consumption fluctuation in this time period is small, and the data collection period is the user's habit period, that is, the user has water consumption regularity in this time period. If it is invalid, it indicates that the user's water consumption fluctuates greatly in this time period, and the user has no water consumption regularity in this time period. Specifically, taking the time span of the data collection period as 7 days as an example, the water heater obtains the first time periods of different dates in the data collection period, and the first total number of the first time periods is 7.

The water heater takes different preset interval days K, K is 1 day, 2 days, 3 days, 4 days, 5 days, 6 days... N-1 day, N is the number of days of the data collection period, that is, the data collection period comprises N first time periods. In this embodiment, the water heater can take more than two preset interval days from 1 day, 2 days, 3 days, 4 days, 5 days, 6 days, etc. N-1 days to obtain a corresponding number of calculation sets. For example, if the number of preset interval days is 3, there are 3 calculation sets. The interval between adjacent first time periods in the set is calculated as the preset interval days. For example, if the data collection period is 7 days and the preset interval days are 1 day and 2 days respectively, then the calculation set corresponding to the preset interval days being 1 day contains 7 first time periods, and the calculation set corresponding to the preset interval days being 2 days contains 4 first time periods which are 1, 3, 5 and 7. The more preset interval days are used, the higher the accuracy of whether the data collection period is valid or not. In addition, the number of the first time period in each calculation set can be limited, the number of the first time periods in the calculation set is greater than or equal to a preset number, so as to avoid the situation that the error is large due to the small number of samples in the calculation set, and the preset number can be any suitable value.

After determining the calculation sets, a second water consumption probability of each calculation set is calculated, specifically, a second total number of the first time periods in the calculation set and a number of the first time periods with water consumption are determined, and a ratio obtained by dividing the number of the first time periods with water consumption by the second total number is the second water consumption probability.

After determining the second water consumption probability corresponding to each calculation set, a maximum second water consumption probability is determined as a target water consumption probability, first differences between the target water consumption probability and other second water consumption probabilities are sequentially calculated, and a first difference greater than a preset difference is taken as a target difference, thereby determining a number of the target differences. The water heater then calculates a fourth ratio of the number of the target differences to the total number of the first differences. If the fourth ratio is greater than a first preset threshold value which can be any appropriate value, such as 70%, it indicates that the user's water consumption fluctuates in an acceptable range, that is, the fluctuation is normal. At this time, it is determined that the data collection period is valid, and the data collection period is the user habit period. If the first ratio is less than or equal to the first preset threshold value, it indicates that the user's water consumption fluctuation is abnormal and the data collection period is invalid, that is, the user has no water consumption regularity in the first time period of the data collection period.

It should be noted that a plurality of data collection periods can be provided in the water heater, and the time spans of the data collection periods are different. When it is determined that the current data collection period is invalid, the next data collection period is taken as the current data collection period until a valid data collection period is determined. Of course, if all the data collection periods are invalid, it shows that the user does not have the water consumption regularity in the first time period.

The water heater may calculate a range and an average value of the second water consumption probabilities of each calculation set, thereby determining whether the user's water consumption fluctuation in the first time period is normal according to the range and the average value, that is, whether the data collection period is valid or not.

Specifically, the water heater extracts the maximum second water consumption probability and the minimum water consumption probability to calculate and obtain a second difference, and then calculates the average corresponding to the second water consumption probabilities. The water heater then calculates a fifth ratio of the second difference to the average and then judges whether the fifth ratio is less than or equal to a second preset threshold value which may be any suitable value, such as 150%. When the fifth ratio is less than or equal to the second preset threshold value, it can be determined that the water consumption fluctuation of the user in the first time period is normal, that is, the data collection period is valid. If the fifth ratio is greater than the second preset threshold, the data collection period is invalid.

When it is determined that the data collection period is invalid, the user does not have the water consumption regularity in the first time period. At this time, the water heater determines a second target water consumption amount of the user in the first time period by determining the second water consumption probabilities of the user in the first time period.

The water consumption probability represents the probability of the user using the water heater in this time period, the higher the water consumption probability, the greater the probability of the user using the water heater in this time period. The water consumption probability corresponding to the first time period can be determined according to the times of water consumption of the user in the first time period. When the number of the first time periods on different dates is constant, the more times of water consumption, the greater the water consumption probability. The water heater determines a second target operation parameter according to the second target water consumption amount, controls the water heater to operate according to the second target operation parameter in the first time period, and/or controls the water heater to operate according to the second target operation parameter before the first time period.

In an embodiment, the water heater analyzes the regularity of water consumption of the user based on the combination of the water consumption parameters associated with the time periods, and then realizes the intelligent function of the water heater according to the water consumption regularity. For example, when the water heater determines that the user does not need to use water in a first time period, it obtains the water consumption probability and the temperature of the inlet water corresponding to the first time period, and determines the target set temperature of the water heater according to the water consumption probability and the temperature of the inlet water.

Specifically, the water heater determines the current water consumption level corresponding to the water consumption probability, the greater the water consumption probability, the lower the current water consumption level; determines an increment value of temperature according to the current water consumption level, the lower the current water consumption level, the smaller the increment value of temperature; determines the target set temperature of the water heater according to the increment value of temperature and the temperature of the inlet water.

If the current water consumption level is level 1, it indicates that the accuracy of the user not using the water heater in the first time period is extremely high. Therefore, the temperature of the inlet water can be set as the target set temperature, and the temperature of the inlet water is the historical temperature of the inlet water corresponding to the first time period stored by the water heater. If the current water consumption level is level 2, it indicates that the accuracy of the user not using the water heater is high. At this time, the target set temperature is set to be the sum of the temperature of the inlet water and the increment value m of temperature. By analogy, the higher the current water consumption level is, the lower the accuracy of the water heater judging that the user does not use the water heater in the first time period will be. and the higher the target set temperature will be. The target set temperature can be determined by the following formula, which is: target set temperature = temperature of inlet water + K* increment value of temperature, where K=0, 1, 2, 3..., the water consumption level determines K, when the water consumption level is level 1, K=0, when the water consumption level is 2, K=1, and so on.

After the target set temperature is determined, the water heater can determine the second target operation parameter of the water heater according to the target set temperature. which is that, the water heater determines the second target operation parameter of the water heater according to the target set temperature; controls the water heater to operate according to the second target operation parameter during the first time period, and/or controls the water heater to operate before the first time period according to the second target operation parameter. After the target set temperature is determined, the water heater can determine the second target operation parameter of the water heater according to the target set temperature. The second target operation parameter comprises at least one of a parameter corresponding to an early heating time span and a parameter corresponding to a heating mode of the water heater. Heating modes comprise a mode of keeping heating during water discharge and a mode of stopping heating during water discharge. Under different heating modes, the early heating time spans are different. For example, the mode of stopping heating during water discharge requires the water heater to heat in advance, while the mode of keeping heating during water discharge does not necessarily require the water heater to heat in advance. The parameters corresponding to the early heating time span can be a heating time span and a heating power of the water heater, and the parameters corresponding to the heating mode can be the start or stop of each heating device in the water heater.

It should be noted that when the second target operation parameter comprises the early heating time span, the water heater determines the operation time point of the water heater according to the early heating time span, and controls the water heater to operate when the current time point reaches the operation time point, thereby realizing that the water heater operates according to the second target operation parameter before the first time period. When the second target operation parameter does not comprise the early heating time span, the water heater is operated in the first time period according to the second target operation parameter, the water heater may also operate in advance before the first time period, or may operate in advance before and within the first time period.

Further, the water heater determines the target set temperature according to the water consumption probability as follows: determining a current water consumption level corresponding to the water consumption probability, the higher the water consumption probability, the lower the current water consumption level; determining an incremental value of temperature according to the current water consumption level, the lower the current water consumption level, the smaller the incremental value of temperature; determining a target set temperature of the water heater according to the incremental value of temperature and a temperature of inlet water.

After determining the water consumption probability of the water heater, the probability interval where the water consumption probability lies is determined to determine the current water consumption level. The water heater divides the water consumption probabilities into several probability intervals, for example, [100%, 85%], (85%, 70%), (75%, 55%), (55%, 40%), and (40%, 0%). Each probability interval corresponds to a water consumption level, for example, [100%, 85%] corresponds to a water consumption level 1, (85%, 70%) corresponds to a water consumption level 2, (75%, 55%) corresponds to a water consumption level 3, (55%, 40%) corresponds to a water consumption level 4, and (40%, 0%) corresponds to a water consumption level 5. If the current water consumption level is level 1, it indicates that the accuracy of the user not using the water heater in the first time period is extremely high. Therefore, the temperature of the inlet water can be set as the target set temperature, and the temperature of the inlet water is the historical temperature of the inlet water corresponding to the first time period stored by the water heater. If the current water consumption level is level 2, it indicates that the accuracy of the user not using the water heater is high. At this time, the target set temperature is set to be the sum of the temperature of the inlet water and the increment value m of temperature. By analogy, the higher the current water consumption level is, the lower the accuracy of the water heater judging that the user does not use the water heater in the first time period will be. and the higher the target set temperature will be. The target set temperature can be determined by the following formula, which is: target set temperature = temperature of inlet water + K* increment value of temperature, where K=0, 1, 2, 3..., the water consumption level determines K, when the water consumption level is level 1, K=0, when the water consumption level is 2, K=1, and so on. The above is only an example of the relationship between the target set temperatures and the water consumption probability levels, and the water heater can modify according to the actual situation.

Further, after determining that the user needs water in the first time period, the water consumption probability corresponding to the first time period is obtained. The target water consumption amount of the first time period is determined according to the water consumption probability. The first target operation parameter of the water heater is determined according to the target water consumption amount, and then the water heater is controlled to operate in and/or before the first time period according to the first target operation parameter.

The present application also provides a water heater. The water heater comprises a memory, a processor, and a heating control program of the water heater stored in the memory and executable by the processor. When the heating control program of the water heater is executed by the processor, each step of the heating control method for the water heater as described in the above embodiments is realized.

The present application also provides a computer-readable storage medium, the computer-readable storage medium stores a heating control program of a water heater, when the heating control program of the water heater is executed by a processor, each step of the heating control method for the water heater as described in the above embodiments is realized.

The above serial numbers of the embodiments of the present application are for description only and do not represent the advantages and disadvantages of the embodiments.

It should be noted that in this article, the term "include", "comprise" or any other variant thereof is intended to cover non-exclusive inclusion, so that a process, method, article or system that includes a set of elements includes not only those elements but also other elements that are not explicitly listed, or also elements inherent to such a process, method, article or system. In the absence of further limitations, an element defined with the statement "include a..." does not preclude the existence of another identical element in the process, method, article or system in which the element is included.

From the above description of the embodiments, it will be clear to those skilled in the art that the method of the above embodiments can be implemented by means of software plus the necessary common hardware platform, and of course also by means of hardware, but in many cases the former is preferred. Based on this understanding, the technical solution of the present application may be embodied in the form of a software product which is stored on a storage medium (such as ROM/RAM, Disk, CD-ROM) as described above, in essence or in part contributing to the prior art, and includes instructions for causing a terminal device (which can be a mobile phone, a computer, a server, an air conditioning system, or a network equipment, etc.) to execute the methods described in various embodiments of the present application.

## Claims

1. A heating control method for a water heater comprising following steps:
(S100) determining a first water consumption probability of a user corresponding to a first time period, and determining a first target water consumption amount according to the first water consumption probability;
(S200) determining a first target operation parameter corresponding to the water heater according to the first target water consumption amount; and
(S300) controlling the water heater to operate according to the first target operation parameter during and/or before the first time period,
**characterized in that**
the step of determining a first target water consumption amount according to the first water consumption probability comprises:
determining a probability interval in which the first water consumption probability is located, and determining a current water consumption level according to the probability interval, the greater the first water consumption probability, the lower the current water consumption level; and
determining the first target water consumption amount according to the current water consumption level¹
¹ current claim 6
and **in that**
the step of determining the first target water consumption amount according to the current water consumption level comprises:
upon determining that the current water consumption level is equal to a preset level, determining a historical maximum water consumption amount of the user in the first time periods as the first target water consumption amount;
upon determining that the current water consumption level is lower than the preset level, determining a maximum water consumption amount of the user in first time periods in a target data collection period as the first target water consumption amount, wherein a water consumption probability of the first time periods in the target data collection period is higher than consumption probabilities of first time periods in other data collection periods; and
upon determining that the current water consumption level is higher than the preset level, increasing a water consumption amount of a target water consumption level to be the first target water consumption amount, wherein the target water consumption level is lower than the current water consumption level by one level².
² current claim 7

2. The heating control method for the water heater according to claim 1, wherein the step of determining a first water consumption probability of a user corresponding to a first time period comprises:
(S 110) determining a total number of first time periods in a data collection period and a number of first time periods with water consumption in the data collection period, wherein each of the first time periods in the data collection period is on a different date; and
(S120) determining the first water consumption probability of the user in the first time period according to the number of the first time periods with water consumption and the total number of the first time periods in the data collection period.

3. The heating control method for the water heater according to claim 2, wherein the step of (S120) determining the first water consumption probability of the user in the first time period according to the number of the first time periods with water consumption and the total number of the first time periods in the data collection period comprises:
(S121) calculating a first ratio of the number of the first time periods with water consumption to the total number of the first time periods; and
(S122) determining the first water consumption probability of the user in the first time period according to the first ratio.

4. The heating control method for the water heater according to claim 3, wherein the step of (S122) determining the first water consumption probability of the user in the first time period according to the first ratio comprises:
determining a second time period earlier than the first time period, wherein the first time period and the second time period are on an identical date, the second time period comprises one or more sub-time periods;
calculating a second ratio of a number of sub-periods with water consumption in the data collection period to a total number of sub-periods in the data collection period; and
weighting and calculating the first ratio and each of the second ratio to determine the first water consumption probability of the user in the first time period.

5. The heating control method for the water heater according to any one of claims 1 to 4, wherein the step of determining a first water consumption probability of a user corresponding to a first time period comprises:
(S130) determining a total number of first time periods in each of various data collection periods and a number of first time periods with water consumption in each of the various data collection periods, wherein, each of the various data collection periods has a different time span;
(S140) calculating a third ratio of the number of the first time periods with water consumption in each of the various data collection periods to the total number of the first time periods in each of the various data collection periods; and
(S150) determining a maximum third ratio as the first water consumption probability of the user in the first time period.

6. The heating control method for the water heater according to any one of claims 1 to 5, wherein the first target operation parameter comprises at least one of the followings: a target set temperature of the water heater, a parameter corresponding to a target heating mode of the water heater, and a parameter corresponding to an early heating time span of the water heater.

7. The heating control method for the water heater according to any one of claims 1 to 6, further comprising:
determining whether the user needs water in the first time period;
upon determining that the user does not need water in the first time period, acquiring the first water consumption probability corresponding to the first time period and a temperature of inlet water corresponding to the first time period, and determining the target set temperature of the water heater according to the first water consumption probability and the temperature of inlet water; and
upon determining that the user needs water in the first time period, executing the step of acquiring the first water consumption probability corresponding to the first time period.

8. The heating control method for the water heater according to claim 7, wherein the step of determining the target set temperature of the water heater according to the first water consumption probability and the temperature of inlet water comprises:
determining a current water consumption level corresponding to the first water consumption probability, the greater the first water consumption probability, the lower the current water consumption level;
determining an incremental value of temperature according to the current water consumption level, the lower the current water consumption level, the smaller the incremental value of temperature; and
determining the target set temperature of the water heater according to the temperature increment value and the temperature of inlet water.

9. The heating control method for the water heater according to claim 7 or 8, wherein after the step of determining the target set temperature of the water heater according to the first water consumption probability and the temperature of inlet water, the method further comprises:
determining a second target operation parameter of the water heater according to the target set temperature; and
controlling the water heater to operate according to the second target operation parameter during and/or before the first time period.

10. The heating control method for the water heater according to any one of claims 1 to 9, further comprising:
acquiring a first total number of first time periods in a current data collection period, wherein each of the first time periods is on a different date;
dividing the first total number of the first time periods into a plurality of calculation sets according to different preset interval days;
calculating a second water consumption probability for each calculation set;
determining whether the current data collection period is valid according to second water consumption probabilities of the plurality of calculation sets; and
upon determining that the current data collection period is invalid, executing the step of determining a first water consumption probability of a user corresponding to a first time period.

11. The heating control method for the water heater of claim 10, wherein the step of determining whether the data collection period is valid according to second water consumption probabilities of the plurality of calculation sets comprises:
taking a maximum second water consumption probability as a target water consumption probability;
calculating a first difference between the target water consumption probability and each of the other second water consumption probabilities other than the target water consumption probability; and
taking a first difference larger than a preset difference as a target difference, and determining whether a fourth ratio of a number of target differences to a total number of first differences is greater than a first preset threshold value, and determining that the current data collection period is valid when the fourth ratio of the number of the target differences to the total number of the first differences is greater than the first preset threshold value; and/or wherein the step of determining whether the data collection period is valid according to second water consumption probabilities of the plurality of calculation sets comprises:
determining a second difference between a maximum second water consumption probability and a minimum second water consumption probability, and determining an average of the second water consumption probabilities; and
calculating a fifth ratio of the second difference to the average, and determining whether the fifth ratio is less than or equal to a second preset threshold value, and
determining that the current data collection period is valid when the fifth ratio is determined to be less than or equal to the second preset threshold value; and/or wherein the step of calculating a second water consumption probability for each calculation set comprises:
determining a second total number of first time periods in each calculation set and a number of first time periods with water consumption in each calculation set; and
calculating a sixth ratio of the number of the first time periods with water consumption to the second total number, to determine a first water consumption probability of a calculation set corresponding to the second total number; and/or wherein the data collection period comprises N first time periods, and the preset interval days comprise at least two of the followings: 1, 2, 3... N-1, to obtain a number of calculation sets, wherein the number of the calculation sets is greater than or equal to 2 and less than or equal to N-1; and/or wherein the number of the first time periods in each calculation set is greater than or equal to a preset number; and/or wherein the water heater is provided with a plurality of data collection periods, when the current data collection period is determined to be invalid, a next data collection period is taken as the current data collection period, to return to the step of acquiring a first total number of first time periods in a current data collection period; and/or wherein the step of determining whether the current data collection period is valid according to second water consumption probabilities of the plurality of calculation sets further comprises:
upon determining that the current data collection period is valid, determining a historical maximum water consumption amount of the user of the first time periods in the current data collection period as a second target water consumption amount;
determining a second target operation parameter according to the second target water consumption amount; and
controlling the water heater to operate according to the second target operation parameter during and/or before the first time period.

12. A water heater, wherein the water heater comprises a memory (102), a processor (101), and a heating control program for the water heater stored in the memory (102) and executable by the processor (101), when the heating control program for the water heater is executed by the processor (101), following steps are implemented:
(S100) determining a first water consumption probability of a user corresponding to a first time period, and determining a target water consumption amount according to the first water consumption probability;
(S200) determining a first target operation parameter corresponding to the water heater according to the target water consumption amount; and
(S300) controlling the water heater to operate according to the first target operation parameter during and/or before the first time period,
**characterized in that**
the step of determining a first target water consumption amount according to the first water consumption probability comprises:
determining a probability interval in which the first water consumption probability is located, and determining a current water consumption level according to the probability interval, the greater the first water consumption probability, the lower the current water consumption level; and
determining the first target water consumption amount according to the current water consumption level³
³ current claim 6
and **in that**
the step of determining the first target water consumption amount according to the current water consumption level comprises:
upon determining that the current water consumption level is equal to a preset level, determining a historical maximum water consumption amount of the user in the first time periods as the first target water consumption amount;
upon determining that the current water consumption level is lower than the preset level, determining a maximum water consumption amount of the user in first time periods in a target data collection period as the first target water consumption amount, wherein a water consumption probability of the first time periods in the target data collection period is higher than consumption probabilities of first time periods in other data collection periods; and
upon determining that the current water consumption level is higher than the preset level, increasing a water consumption amount of a target water consumption level to be the first target water consumption amount, wherein the target water consumption level is lower than the current water consumption level by one level⁴.
⁴ current claim 7

13. A computer-readable storage medium storing a heating control program for a water heater, when the heating control program for the water heater is executed by a processor (101), following steps are implemented:
(S100) determining a first water consumption probability of a user corresponding to a first time period, and determining a target water consumption amount according to the first water consumption probability;
(S200) determining a first target operation parameter corresponding to the water heater according to the target water consumption amount; and
(S300) controlling the water heater to operate according to the first target operation parameter during and/or before the first time period,
**characterized in that**
the step of determining a first target water consumption amount according to the first water consumption probability comprises:
determining a probability interval in which the first water consumption probability is located, and determining a current water consumption level according to the probability interval, the greater the first water consumption probability, the lower the current water consumption level; and
determining the first target water consumption amount according to the current water consumption level⁵
⁵ current claim 6
and **in that**
the step of determining the first target water consumption amount according to the current water consumption level comprises:
upon determining that the current water consumption level is equal to a preset level, determining a historical maximum water consumption amount of the user in the first time periods as the first target water consumption amount;
upon determining that the current water consumption level is lower than the preset level, determining a maximum water consumption amount of the user in first time periods in a target data collection period as the first target water consumption amount, wherein a water consumption probability of the first time periods in the target data collection period is higher than consumption probabilities of first time periods in other data collection periods; and
upon determining that the current water consumption level is higher than the preset level, increasing a water consumption amount of a target water consumption level to be the first target water consumption amount, wherein the target water consumption level is lower than the current water consumption level by one level⁶.
⁶ current claim 7

## Patentansprüche

1. Heizungssteuerungsverfahren für einen Wassererhitzer, umfassend die folgenden Schritte:
(S100) Bestimmen einer ersten Wasserverbrauchswahrscheinlichkeit eines Benutzers, die einer ersten Zeitspanne entspricht, und Bestimmen einer ersten Zielwasserverbrauchsmenge gemäß der ersten Wasserverbrauchswahrscheinlichkeit;
(S200) Bestimmen eines ersten Zielbetriebsparameters, der dem Wassererhitzer entspricht, gemäß der ersten Zielwasserverbrauchsmenge; und
(S300) Steuern des Wassererhitzers, so dass er während und/oder vor der ersten Zeitspanne gemäß dem ersten Zielbetriebsparameter betrieben wird,
**dadurch gekennzeichnet, dass**
der Schritt des Bestimmens einer ersten Zielwasserverbrauchsmenge gemäß der ersten Wasserverbrauchswahrscheinlichkeit Folgendes umfasst:
Bestimmen eines Wahrscheinlichkeitsintervalls, in dem die erste Wasserverbrauchswahrscheinlichkeit liegt, und Bestimmen eines aktuellen Wasserverbrauchsniveaus gemäß dem Wahrscheinlichkeitsintervall, wobei das aktuelle Wasserverbrauchsniveau umso niedriger ist, je größer die erste Wasserverbrauchswahrscheinlichkeit ist; und
Bestimmen der ersten Zielwasserverbrauchsmenge gemäß dem aktuellen Wasserverbrauchsniveau¹
¹ aktueller Anspruch 6
und dadurch, dass der Schritt des Bestimmens der ersten Zielwasserverbrauchsmenge gemäß dem aktuellen Wasserverbrauchsniveau Folgendes umfasst:
wenn bestimmt wird, dass das aktuelle Wasserverbrauchsniveau gleich einem voreingestellten Niveau ist, Bestimmen einer historischen maximalen Wasserverbrauchsmenge des Benutzers in den ersten Zeitspannen als die erste Zielwasserverbrauchsmenge;
wenn bestimmt wird, dass das aktuelle Wasserverbrauchsniveau niedriger als das voreingestellte Niveau ist, Bestimmen einer maximalen Wasserverbrauchsmenge des Benutzers in den ersten Zeitspannen in einer Zieldatensammelzeitspanne als die erste Zielwasserverbrauchsmenge, wobei eine Wasserverbrauchswahrscheinlichkeit der ersten Zeitspannen in der Zieldatensammelzeitspanne höher ist als Verbrauchswahrscheinlichkeiten von ersten Zeitspannen in anderen Datensammelzeitspannen; und
wenn bestimmt wird, dass das aktuelle Wasserverbrauchsniveau höher als das voreingestellte Niveau ist, Erhöhen einer Wasserverbrauchsmenge eines Zielwasserverbrauchsniveaus auf die erste Zielwasserverbrauchsmenge, wobei das Zielwasserverbrauchsniveau um eine Stufe² niedriger als das aktuelle Wasserverbrauchsniveau ist.
² aktueller Anspruch 7

2. Heizungssteuerungsverfahren für den Wassererhitzer gemäß Anspruch 1, wobei der Schritt des Bestimmens einer ersten Wasserverbrauchswahrscheinlichkeit eines Benutzers, die einer ersten Zeitspanne entspricht, Folgendes umfasst:
(S110) Bestimmen einer Gesamtzahl von ersten Zeitspannen in einer Datensammelzeitspanne und einer Anzahl von ersten Zeitspannen mit Wasserverbrauch in der Datensammelzeitspanne, wobei jede der ersten Zeitspannen in der Datensammelzeitspanne an einem unterschiedlichen Datum liegt; und
(S120) Bestimmen der ersten Wasserverbrauchswahrscheinlichkeit des Benutzers in der ersten Zeitspanne gemäß der Anzahl der ersten Zeitspannen mit Wasserverbrauch und der Gesamtzahl der ersten Zeitspannen in der Datensammelzeitspanne.
² aktueller Anspruch 7

3. Heizungssteuerungsverfahren für den Wassererhitzer gemäß Anspruch 2, wobei der Schritt (S120) des Bestimmens der ersten Wasserverbrauchswahrscheinlichkeit des Benutzers in der ersten Zeitspanne gemäß der Anzahl der ersten Zeitspannen mit Wasserverbrauch und der Gesamtzahl der ersten Zeitspannen in der Datensammelzeitspanne Folgendes umfasst:
(S121) Berechnen eines ersten Verhältnisses zwischen der Anzahl der ersten Zeitspannen mit Wasserverbrauch und der Gesamtzahl der ersten Zeitspannen; und
(S122) Bestimmen der ersten Wasserverbrauchswahrscheinlichkeit des Benutzers in der ersten Zeitspanne gemäß dem ersten Verhältnis.

4. Heizungssteuerungsverfahren für den Wassererhitzer gemäß Anspruch 3, wobei der Schritt (S122) des Bestimmens der ersten Wasserverbrauchswahrscheinlichkeit des Benutzers in der ersten Zeitspanne gemäß dem ersten Verhältnis Folgendes umfasst:
Bestimmen einer zweiten Zeitspanne, die vor der ersten Zeitspanne liegt, wobei die erste Zeitspanne und die zweite Zeitspanne auf ein identisches Datum fallen und die zweite Zeitspanne eine oder mehrere Unterzeitspannen umfasst;
Berechnen eines zweiten Verhältnisses einer Anzahl von Unterzeitspannen mit Wasserverbrauch in der Datensammelzeitspanne zu einer Gesamtzahl von Unterzeitspannen in der Datensammelzeitspanne; und
Gewichten und Berechnen des ersten Verhältnisses und jedes zweiten Verhältnisses zum Bestimmen der ersten Wasserverbrauchswahrscheinlichkeit des Benutzers in der ersten Zeitspanne.

5. Heizungssteuerungsverfahren für den Wassererhitzer gemäß einem der Ansprüche 1 bis 4, wobei der Schritt des Bestimmens einer ersten Wasserverbrauchswahrscheinlichkeit eines Benutzers entsprechend einer ersten Zeitspanne Folgendes umfasst:
(S130) Bestimmen einer Gesamtzahl von ersten Zeitspannen in jeder der verschiedenen Datensammelzeitspannen und einer Anzahl von ersten Zeitspannen mit Wasserverbrauch in jeder der verschiedenen Datensammelzeitspannen, wobei jede der verschiedenen Datensammelzeitspannen eine unterschiedliche Zeitspanne aufweist;
(S140) Berechnen eines dritten Verhältnisses der Anzahl der ersten Zeitspannen mit Wasserverbrauch in jeder der verschiedenen Datensammelzeitspannen zu der Gesamtzahl der ersten Zeitspannen in jeder der verschiedenen Datensammelzeitspannen; und
(S150) Bestimmen eines maximalen dritten Verhältnisses als die erste Wasserverbrauchswahrscheinlichkeit des Benutzers in der ersten Zeitspanne.

6. Heizungssteuerungsverfahren für den Wassererhitzer gemäß einem der Ansprüche 1 bis 5, wobei der erste Zielbetriebsparameter mindestens einen der folgenden Parameter umfasst: eine Zielsolltemperatur des Wassererhitzers, einen Parameter, der einem Zielheizmodus des Wassererhitzers entspricht, und einen Parameter, der einer frühen Heizzeitspanne des Wassererhitzers entspricht.

7. Verfahren zur Heizungssteuerung für den Wassererhitzer gemäß einem der Ansprüche 1 bis 6, ferner umfassend:
Bestimmen, ob der Benutzer in der ersten Zeitspanne Wasser benötigt;
wenn bestimmt wird, dass der Benutzer in der ersten Zeitspanne kein Wasser benötigt, Erfassen der ersten Wasserverbrauchswahrscheinlichkeit, die der ersten Zeitspanne entspricht, und einer Temperatur des Einlasswassers, die der ersten Zeitspanne entspricht, und Bestimmen der Zielsolltemperatur des Wassererhitzers gemäß der ersten Wasserverbrauchswahrscheinlichkeit und der Temperatur des Einlasswassers, und
wenn bestimmt wird, dass der Benutzer in der ersten Zeitspanne Wasser benötigt, Ausführen des Schritts des Erfassens der ersten Wasserverbrauchswahrscheinlichkeit, die der ersten Zeitspanne entspricht.

8. Heizungssteuerungsverfahren für den Wassererhitzer gemäß Anspruch 7, wobei der Schritt des Bestimmens der Zielsolltemperatur des Wassererhitzers gemäß der ersten Wasserverbrauchswahrscheinlichkeit und der Temperatur des Einlasswassers Folgendes umfasst:
Bestimmen eines aktuellen Wasserverbrauchsniveaus entsprechend der ersten Wasserverbrauchswahrscheinlichkeit, wobei das aktuelle Wasserverbrauchsniveau umso niedriger ist, je größer die erste Wasserverbrauchswahrscheinlichkeit ist;
Bestimmen eines inkrementellen Temperaturwertes entsprechend dem aktuellen Wasserverbrauchsniveau, wobei der inkrementelle Temperaturwert umso kleiner ist, je niedriger das aktuelle Wasserverbrauchsniveau ist; und
Bestimmen der Zielsolltemperatur des Wassererhitzers gemäß dem inkrementellen Temperaturwert und der Temperatur des Einlasswassers.

9. Heizungssteuerungsverfahren für den Wassererhitzer gemäß Anspruch 7 oder 8, wobei das Verfahren nach dem Schritt des Bestimmens der Zielsolltemperatur des Wassererhitzers gemäß der ersten Wasserverbrauchswahrscheinlichkeit und der Temperatur des Einlasswassers ferner Folgendes umfasst:
Bestimmen eines zweiten Zielbetriebsparameters des Wassererhitzers gemäß der Zielsolltemperatur; und
Steuern des Wassererhitzers, so dass er gemäß dem zweiten Zielbetriebsparameter während und/oder vor der ersten Zeitspanne betrieben wird.

10. Heizungssteuerungsverfahren für den Wassererhitzer gemäß einem der Ansprüche 1 bis 9, ferner umfassend:
Erfassen einer ersten Gesamtzahl von ersten Zeitspannen in einer aktuellen Datensammelzeitspanne, wobei jede der ersten Zeitspannen an einem anderen Datum liegt;
Aufteilen der ersten Gesamtzahl der ersten Zeitspannen in eine Vielzahl von Berechnungssätzen gemäß verschiedener voreingestellter Intervalltage;
Berechnen einer zweiten Wasserverbrauchswahrscheinlichkeit für jeden Berechnungssatz;
Bestimmen, ob die aktuelle Datensammelzeitspanne gemäß den zweiten Wasserverbrauchswahrscheinlichkeiten der Vielzahl von Berechnungssätzen gültig ist; und
wenn festgestellt wird, dass die aktuelle Datensammelzeitspanne ungültig ist, Ausführen des Schritts des Bestimmens einer ersten Wasserverbrauchswahrscheinlichkeit eines Benutzers entsprechend einer ersten Zeitspanne.

11. Heizungssteuerungsverfahren für den Wassererhitzer gemäß Anspruch 10, wobei der Schritt des Bestimmens, ob die Datensammelzeitspanne gültig ist, gemäß zweiten Wasserverbrauchswahrscheinlichkeiten der Vielzahl von Berechnungssätzen Folgendes umfasst:
Annehmen einer maximalen zweiten Wasserverbrauchswahrscheinlichkeit als Zielwasserverbrauchswahrscheinlichkeit;
Berechnen einer ersten Differenz zwischen der Zielwasserverbrauchswahrscheinlichkeit und jeder der anderen zweiten Wasserverbrauchswahrscheinlichkeiten, die sich von der Zielwasserverbrauchswahrscheinlichkeit unterscheiden; und
Annehmen einer ersten Differenz, die größer als eine voreingestellte Differenz ist, als eine Zieldifferenz, und Bestimmen, ob ein viertes Verhältnis einer Anzahl von Zieldifferenzen zu einer Gesamtzahl von ersten Differenzen größer als ein erster voreingestellter Schwellenwert ist, und Bestimmen, dass die aktuelle Datensammelzeitspanne gültig ist, wenn das vierte Verhältnis der Anzahl der Zieldifferenzen zu der Gesamtzahl der ersten Differenzen größer als der erste voreingestellte Schwellenwert ist; und/oder wobei der Schritt des Bestimmens, ob die Datensammelzeitspanne gültig ist, gemäß zweiten Wasserverbrauchswahrscheinlichkeiten der Vielzahl von Berechnungssätzen Folgendes umfasst:
Bestimmen einer zweiten Differenz zwischen einer maximalen zweiten Wasserverbrauchswahrscheinlichkeit und einer minimalen zweiten Wasserverbrauchswahrscheinlichkeit, und Bestimmen eines Durchschnitts der zweiten Wasserverbrauchswahrscheinlichkeiten; und
Berechnen eines fünften Verhältnisses der zweiten Differenz zum Durchschnitt und Bestimmen, ob das fünfte Verhältnis kleiner oder gleich einem zweiten voreingestellten Schwellenwert ist, und Bestimmen, dass die aktuelle Datensammelzeitspanne gültig ist, wenn bestimmt wird, dass das fünfte Verhältnis kleiner oder gleich dem zweiten voreingestellten Schwellenwert ist; und/oder wobei der Schritt des Berechnens einer zweiten Wasserverbrauchswahrscheinlichkeit für jeden Berechnungssatz Folgendes umfasst:
Bestimmen einer zweiten Gesamtzahl von ersten Zeitspannenn in jedem Berechnungssatz und einer Anzahl von ersten Zeitspannenn mit Wasserverbrauch in jedem Berechnungssatz; und
Berechnen eines sechsten Verhältnisses der Anzahl der ersten Zeitspannen mit Wasserverbrauch zu der zweiten Gesamtzahl, um eine erste Wasserverbrauchswahrscheinlichkeit eines Berechnungssatzes zu bestimmen, der der zweiten Gesamtzahl entspricht; und/oder wobei der Datensammelzeitraum N erste Zeitspannen umfasst und die voreingestellten Intervalltage mindestens zwei der folgenden umfassen: 1, 2, 3... N-1, um eine Anzahl von Berechnungssätzen zu erhalten, wobei die Anzahl der Berechnungssätze größer als oder gleich 2 und kleiner als oder gleich N-1 ist; und/oder wobei die Anzahl der ersten Zeitspannen in jedem Berechnungssatz größer als oder gleich einer voreingestellten Anzahl ist; und/oder wobei der Wassererhitzer mit einer Vielzahl von Datensammelzeitspannen versehen ist, wenn die aktuelle Datensammelzeitspanne als ungültig bestimmt wird, eine nächste Datensammelzeitspanne als die aktuelle Datensammelzeitspanne angenommen wird, um zu dem Schritt des Erfassens einer ersten Gesamtzahl von ersten Zeitspannen in einer aktuellen Datensammelzeitspanne zurückzukehren; und/oder wobei der Schritt des Bestimmens, ob die aktuelle Datensammelzeitspanne gültig ist, gemäß zweiten Wasserverbrauchswahrscheinlichkeiten der Vielzahl von Berechnungssätzen ferner Folgendes umfasst:
wenn bestimmt wird, dass die aktuelle Datensammelzeitspanne gültig ist, Bestimmen einer historischen maximalen Wasserverbrauchsmenge des Benutzers der ersten Zeitspannen in der aktuellen Datensammelzeitspanne als eine zweite Zielwasserverbrauchsmenge;
Bestimmen eines zweiten Zielbetriebsparameters gemäß der zweiten Zielwasserverbrauchsmenge; und
Steuern des Wassererhitzers, so dass er gemäß dem zweiten Zielbetriebsparameter während und/oder vor der ersten Zeitspanne betrieben wird.

12. Wassererhitzer, wobei der Wassererhitzer einen Speicher (102), einen Prozessor (101) und ein Heizungssteuerungsprogramm für den Wassererhitzer umfasst, das in dem Speicher (102) gespeichert ist und von dem Prozessor (101) ausgeführt werden kann, wenn das Heizungssteuerungsprogramm für den Wassererhitzer von dem Prozessor (101) ausgeführt wird, die folgenden Schritte implementiert werden:
(S100) Bestimmen einer ersten Wasserverbrauchswahrscheinlichkeit eines Benutzers, die einer ersten Zeitspanne entspricht, und Bestimmen einer Zielwasserverbrauchsmenge gemäß der ersten Wasserverbrauchswahrscheinlichkeit;
(S200) Bestimmen eines ersten Zielbetriebsparameters, der dem Wassererhitzer entspricht, gemäß der Zielwasserverbrauchsmenge; und
(S300) Steuern des Wassererhitzers, so dass er gemäß dem ersten Zielbetriebsparameter während und/oder vor der ersten Zeitspanne betrieben wird,
**dadurch gekennzeichnet, dass**
der Schritt des Bestimmens einer ersten Zielwasserverbrauchsmenge gemäß der ersten Wasserverbrauchswahrscheinlichkeit Folgendes umfasst:
Bestimmen eines Wahrscheinlichkeitsintervalls, in dem die erste Wasserverbrauchswahrscheinlichkeit liegt, und Bestimmen eines aktuellen Wasserverbrauchsniveaus gemäß dem Wahrscheinlichkeitsintervall, wobei das aktuelle Wasserverbrauchsniveau umso niedriger ist, je größer die erste Wasserverbrauchswahrscheinlichkeit ist; und
Bestimmen der ersten Zielwasserverbrauchsmenge gemäß dem aktuellen Wasserverbrauchsniveau³
³ aktueller Anspruch 6
und dass
der Schritt des Bestimmens der ersten Zielwasserverbrauchsmenge gemäß dem aktuellen Wasserverbrauchsniveau Folgendes umfasst:
wenn bestimmt wird, dass der aktuelle Wasserverbrauchswert gleich einem voreingestellten Wert ist, Bestimmen einer historischen maximalen Wasserverbrauchsmenge des Benutzers in den ersten Zeitspannenn als erste Zielwasserverbrauchsmenge;
wenn bestimmt wird, dass der aktuelle Wasserverbrauchswert niedriger als der voreingestellte Wert ist, Bestimmen einer maximalen Wasserverbrauchsmenge des Benutzers in ersten Zeitspannen in einer Zieldatensammelzeitspanne als die erste Zielwasserverbrauchsmenge, wobei eine Wasserverbrauchswahrscheinlichkeit der ersten Zeitspannen in der Zieldatensammelzeitspanne höher ist als Verbrauchswahrscheinlichkeiten von ersten Zeitspannen in anderen Datensammelzeitspannen; und
wenn festgestellt wird, dass das aktuelle Wasserverbrauchsniveau höher als das voreingestellte Niveau ist, Erhöhen einer Wasserverbrauchsmenge eines Zielwasserverbrauchsniveaus auf die erste Zielwasserverbrauchsmenge, wobei das Zielwasserverbrauchsniveau um ein Niveau⁴ niedriger als das aktuelle Wasserverbrauchsniveau ist.
⁴ aktueller Anspruch 7

13. Computerlesbares Speichermedium, das ein Heizungssteuerungsprogramm für einen Wassererhitzer speichert, wenn das Heizungssteuerungsprogramm für den Wassererhitzer von einem Prozessor (101) ausgeführt wird, werden die folgenden Schritte ausgeführt:
(S100) Bestimmen einer ersten Wasserverbrauchswahrscheinlichkeit eines Benutzers, die einer ersten Zeitspanne entspricht, und Bestimmen einer Zielwasserverbrauchsmenge gemäß der ersten Wasserverbrauchswahrscheinlichkeit;
(S200) Bestimmen eines ersten Zielbetriebsparameters, der dem Wassererhitzer entspricht, gemäß der Zielwasserverbrauchsmenge; und
(S300) Steuern des Wassererhitzers, so dass er gemäß dem ersten Zielbetriebsparameter während und/oder vor der ersten Zeitspanne betrieben wird,
**dadurch gekennzeichnet, dass**
der Schritt des Bestimmens einer ersten Zielwasserverbrauchsmenge gemäß der ersten Wasserverbrauchswahrscheinlichkeit Folgendes umfasst:
Bestimmen eines Wahrscheinlichkeitsintervalls, in dem die erste Wasserverbrauchswahrscheinlichkeit liegt, und Bestimmen eines aktuellen Wasserverbrauchsniveaus entsprechend dem Wahrscheinlichkeitsintervall, wobei das aktuelle Wasserverbrauchsniveau umso niedriger ist, je größer die erste Wasserverbrauchswahrscheinlichkeit ist; und
Bestimmen der ersten Zielwasserverbrauchsmenge gemäß dem aktuellen Wasserverbrauchsniveau⁵
⁵ aktueller Anspruch 6
und dass
der Schritt des Bestimmens der ersten Zielwasserverbrauchsmenge gemäß dem aktuellen Wasserverbrauchsniveau Folgendes umfasst:
wenn bestimmt wird, dass der aktuelle Wasserverbrauchswert gleich einem voreingestellten Wert ist, Bestimmen einer historischen maximalen Wasserverbrauchsmenge des Benutzers in den ersten Zeitspannenn als erste Zielwasserverbrauchsmenge;
wenn bestimmt wird, dass der aktuelle Wasserverbrauchswert niedriger als der voreingestellte Wert ist, Bestimmen einer maximalen Wasserverbrauchsmenge des Benutzers in ersten Zeitspannen in einer Zieldatensammelzeitspanne als die erste Zielwasserverbrauchsmenge, wobei eine Wasserverbrauchswahrscheinlichkeit der ersten Zeitspannen in der Zieldatensammelzeitspanne höher ist als Verbrauchswahrscheinlichkeiten von ersten Zeitspannen in anderen Datensammelzeitspannen; und
wenn festgestellt wird, dass das aktuelle Wasserverbrauchsniveau höher als das voreingestellte Niveau ist, Erhöhen einer Wasserverbrauchsmenge eines Zielwasserverbrauchsniveaus auf die erste Zielwasserverbrauchsmenge, wobei das Zielwasserverbrauchsniveau um ein Niveau⁶ niedriger als das aktuelle Wasserverbrauchsniveau ist.
⁶ aktueller Anspruch 7

## Revendications

1. Procédé de commande de chauffage pour un chauffe-eau comprenant des étapes suivantes :
(5100) la détermination d'une première probabilité de consommation d'eau d'un utilisateur correspondant à une première période de temps, et la détermination d'une première quantité de consommation d'eau cible selon la première probabilité de consommation d'eau ;
(S200) la détermination d'un premier paramètre de fonctionnement cible correspondant au chauffe-eau selon la première quantité de consommation d'eau cible ; et
(S300) la commande du chauffe-eau pour fonctionner selon le premier paramètre de fonctionnement cible pendant et/ou avant la première période de temps,
**caractérisé en ce que**
l'étape de détermination d'une première quantité de consommation d'eau cible selon la première probabilité de consommation d'eau comprend :
la détermination d'un intervalle de probabilité dans lequel la première probabilité de consommation d'eau se situe, et la détermination d'un niveau de consommation d'eau actuel selon l'intervalle de probabilité, plus la première probabilité de consommation d'eau est grande, plus le niveau de consommation d'eau actuel est faible ; et
la détermination de la première quantité de consommation d'eau cible selon le niveau de consommation d'eau actuel,
et **en ce que**
l'étape de détermination de la première quantité de consommation d'eau cible selon le niveau de consommation d'eau actuel comprend :
après avoir déterminé que le niveau de consommation d'eau actuel est égal à un niveau prédéfini, la détermination d'un historique d'une quantité de consommation d'eau maximale de l'utilisateur dans les premières périodes de temps en tant que la première quantité de consommation d'eau cible ;
après avoir déterminé que le niveau de consommation d'eau actuel est inférieur au niveau prédéfini, la détermination d'une quantité de consommation d'eau maximale de l'utilisateur dans les premières périodes de temps dans une période de collecte de données cible en tant que la première quantité de consommation d'eau cible, dans lequel une probabilité de consommation d'eau des premières périodes de temps dans la période de collecte de données cible est supérieure à des probabilités de consommation de premières périodes de temps dans d'autres périodes de collecte de données ; et
après avoir déterminé que le niveau de consommation d'eau actuel est plus élevé que le niveau prédéfini, l'augmentation de la quantité de consommation d'eau d'un niveau de consommation d'eau cible de manière à être la première quantité de consommation d'eau cible, dans lequel le niveau de consommation d'eau cible est inférieur au niveau de consommation d'eau actuel d'un niveau.

2. Procédé de commande de chauffage pour le chauffe-eau selon la revendication 1, dans lequel l'étape de détermination d'une première probabilité de consommation d'eau d'un utilisateur correspondant à une première période de temps comprend :
(5110) la détermination d'un nombre total de premières périodes de temps dans une période de collecte de données et d'un nombre de premières périodes de temps avec la consommation d'eau dans la période de collecte de données, dans lequel chacune des premières périodes de temps dans la période de collecte de données est à une date différente ; et
(S120) la détermination de la première probabilité de consommation d'eau de l'utilisateur dans la première période de temps en fonction du nombre des premières périodes de temps avec la consommation d'eau et du nombre total des premières périodes de temps dans la période de collecte de données.

3. Procédé de commande de chauffage pour le chauffe-eau selon la revendication 2, dans lequel l'étape de (S120) détermination de la première probabilité de consommation d'eau de l'utilisateur dans la première période de temps selon le nombre des premières périodes de temps avec la consommation d'eau et du nombre total des premières périodes de temps dans la période de collecte de données comprend :
(S121) le calcul d'un premier rapport du nombre des premières périodes de temps avec la consommation d'eau par rapport au nombre total des premières périodes de temps ; et
(S122) la détermination de la première probabilité de consommation d'eau de l'utilisateur dans la première période de temps selon le premier rapport.

4. Procédé de commande de chauffage pour le chauffe-eau selon la revendication 3, dans lequel l'étape de (S122) détermination de la première probabilité de consommation d'eau de l'utilisateur dans la première période de temps selon le premier rapport comprend :
la détermination d'une deuxième période de temps antérieure à la première période de temps, dans lequel la première période de temps et la deuxième période de temps sont sur une date identique, la deuxième période de temps comprend une ou plusieurs sous-périodes de temps ;
le calcul d'un deuxième rapport d'un nombre de sous-périodes avec la consommation d'eau dans la période de collecte de données par rapport à un nombre total de sous-périodes dans la période de collecte de données ; et
la pondération et le calcul du premier rapport et de chacun du deuxième rapport pour déterminer la première probabilité de consommation d'eau de l'utilisateur dans la première période de temps.

5. Procédé de commande de chauffage pour le chauffe-eau selon l'une quelconque des revendications 1 à 4, dans lequel l'étape de détermination d'une première probabilité de consommation d'eau d'un utilisateur correspondant à une première période de temps comprend :
(S130) la détermination d'un nombre total de premières périodes de temps dans chacune de diverses périodes de collecte de données et d'un nombre de premières périodes de temps avec la consommation d'eau dans chacune des diverses périodes de collecte de données, dans lequel chacune des diverses périodes de collecte de données présente un intervalle de temps différent ;
(S140) la détermination d'un troisième rapport du nombre des premières périodes de temps avec la consommation d'eau dans chacune des diverses périodes de collecte de données par rapport au nombre total des premières périodes de temps dans chacune des diverses périodes de collecte de données ; et
(S150) la détermination d'un troisième rapport maximal en tant que la première probabilité de consommation d'eau de l'utilisateur dans la première période de temps.

6. Procédé de commande de chauffage pour le chauffe-eau selon l'une quelconque des revendications 1 à 5,
dans lequel le premier paramètre de fonctionnement cible comprend au moins un des éléments suivants : une température définie cible du chauffe-eau, un paramètre correspondant à un mode de chauffage cible du chauffe-eau, et un paramètre correspondant à un intervalle de temps de chauffage anticipé du chauffe-eau.

7. Procédé de commande de chauffage pour le chauffe-eau selon l'une quelconque des revendications 1 à 6, comprenant en outre :
la détermination pour savoir si l'utilisateur a besoin d'eau dans la première période de temps ;
après avoir déterminé que l'utilisateur n'a pas besoin d'eau dans la première période de temps, l'acquisition de la première probabilité de consommation d'eau correspondant à la première période de temps et d'une température de l'eau d'entrée correspondant à la première période de temps, et la détermination de la température définie cible du chauffe-eau selon la première probabilité de consommation d'eau et de la température de l'eau d'entrée ; et
après avoir déterminé que l'utilisateur a besoin d'eau dans la première période de temps, l'exécution de l'étape d'acquisition de la première probabilité de consommation d'eau correspondant à la première période de temps.

8. Procédé de commande de chauffage pour le chauffe-eau selon la revendication 7, dans lequel l'étape de détermination de la température définie cible du chauffe-eau selon la première probabilité de consommation d'eau et la température de l'eau d'entrée comprend :
la détermination d'un niveau de consommation d'eau actuel correspondant à la première probabilité de consommation d'eau, plus la première probabilité de consommation d'eau est grande, plus le niveau de consommation d'eau actuel est faible ;
la détermination d'une valeur incrémentale de température selon le niveau de consommation d'eau actuel, plus le niveau de consommation d'eau actuel est bas, plus la valeur incrémentale de température est petite ; et
la détermination de la température définie cible du chauffe-eau selon la valeur incrémentale de température et la température de l'eau d'entrée.

9. Procédé de commande de chauffage pour le chauffe-eau selon la revendication 7 ou 8, dans lequel après l'étape de détermination de la température définie cible du chauffe-eau selon la première probabilité de consommation d'eau et la température de l'eau d'entrée, le procédé comprend en outre :
la détermination d'un deuxième paramètre de fonctionnement cible du chauffe-eau selon la température définie cible ; et
la commande du chauffe-eau pour fonctionner selon le deuxième paramètre de fonctionnement cible pendant et/ou avant la première période de temps.

10. Procédé de commande de chauffage pour le chauffe-eau selon l'une quelconque des revendications 1 à 9, comprenant en outre :
l'acquisition d'un premier nombre total de premières périodes de temps dans une période de collecte de données actuelle,
dans lequel chacune des premières périodes de temps est sur une date différente ;
la division du premier nombre total des premières périodes de temps en une pluralité d'ensembles de calcul selon différents jours d'intervalle prédéfinis ;
le calcul d'une deuxième probabilité de consommation d'eau pour chaque ensemble de calcul ;
la détermination pour savoir si la période de collecte de données actuelle est valide selon des deuxièmes probabilités de consommation d'eau de la pluralité d'ensembles de calcul ; et
après avoir déterminé que la période de collecte de données actuelle est invalide,
l'exécution de l'étape de détermination d'une première probabilité de consommation d'eau d'un utilisateur correspondant à une première période de temps.

11. Procédé de commande de chauffage pour le chauffe-eau selon la revendication 10, dans lequel l'étape de détermination pour savoir si la période de collecte de données est valide selon des deuxièmes probabilités de consommation d'eau de la pluralité d'ensembles de calcul comprend :
la prise en compte d'une deuxième probabilité de consommation d'eau maximale en tant qu'une probabilité de consommation d'eau cible ;
le calcul d'une première différence entre la probabilité de consommation d'eau cible et
chacune des autres deuxièmes probabilités de consommation d'eau autres que la probabilité de consommation d'eau cible ; et
la prise en compte d'une première différence plus grande qu'une différence prédéfinie en tant qu'une différence cible, et la détermination pour savoir si un quatrième rapport d'un nombre de différences cible par rapport à un nombre total de premières différences est plus grand qu'une première valeur seuil prédéfinie, et la détermination que la période de collecte de données actuelle est valide lorsque le quatrième rapport du nombre des différences cible est plus grand que la première valeur seuil prédéfinie ; et/ou dans lequel l'étape de la détermination pour savoir si la période de collecte de données est valide selon des deuxièmes probabilités de consommation d'eau de la pluralité d'ensembles de calcul comprend :
la détermination d'une deuxième différence entre une deuxième probabilité de consommation d'eau maximale et une deuxième probabilité de consommation d'eau minimale, et la détermination d'une moyenne des deuxièmes probabilités de consommation d'eau ; et
le calcul d'un cinquième rapport de la deuxième différence par rapport à la moyenne, et
la détermination pour savoir si le cinquième rapport est inférieur ou égal à une deuxième valeur seuil prédéfinie, et la détermination que la période de collecte de données actuelle est valide lorsque le cinquième rapport est déterminé comme étant inférieur ou égal à la deuxième valeur seuil prédéfinie ; et/ou dans lequel
l'étape de calcul d'une deuxième probabilité de consommation d'eau pour chaque ensemble de calcul comprend :
la détermination d'un deuxième nombre total de premières périodes de temps dans chaque ensemble de calcul et d'un nombre de premières périodes de temps avec la consommation d'eau dans chaque ensemble de calcul ; et
le calcul d'un sixième rapport du nombre des premières périodes de temps avec la consommation d'eau par rapport au deuxième nombre total pour déterminer une première probabilité de consommation d'eau d'un ensemble de calcul correspondant au deuxième nombre total ; et/ou dans lequel la période de collecte de données comprend N premières périodes de temps, et les jours d'intervalle prédéfinis comprennent au moins deux des éléments suivants : 1, 2, 3, 3 ... N-1 pour obtenir un nombre d'ensembles de calcul, dans lequel le nombre des ensembles de calcul est supérieur ou
égal à 2 et est inférieur ou égal à N-1 ; et/ou dans lequel le nombre des premières périodes de temps dans chaque ensemble de calcul est supérieur ou égal à un nombre prédéfini ; et/ou dans lequel le chauffe-eau est prévu avec une pluralité de périodes de collecte de données lorsque la période de collecte de données est déterminée comme étant invalide, une prochaine période de collecte de données est prise en compte en tant que la période de collecte de données actuelle, pour retourner à l'étape d'acquisition d'un premier nombre total de premières périodes de temps dans une période de collecte de données actuelle ; et/ou dans lequel l'étape de détermination pour savoir si la période de collecte de données actuelle est valide selon des deuxièmes probabilités de consommation d'eau de la pluralité d'ensembles de calcul comprend en outre :
après avoir déterminé que la période de collecte de données actuelle est valide, la détermination d'un historique d'une quantité de consommation d'eau maximale de l'utilisateur des premières périodes de temps dans la période de collecte de données actuelle en tant qu'une deuxième quantité de consommation d'eau cible ;
la détermination d'un deuxième paramètre de fonctionnement cible selon la deuxième quantité de consommation d'eau cible ; et
la commande du chauffe-eau pour fonctionner selon le deuxième paramètre de fonctionnement cible pendant et/ou avant la première période de temps.

12. Chauffe-eau, dans lequel le chauffe-eau comprend une mémoire (102), un processeur (101), et un programme de commande de chauffage pour le chauffe-eau stocké dans la mémoire (102) et pouvant être exécuté par le processeur (101) lorsque le programme de commande de chauffage pour le chauffe-eau est exécuté par le processeur (101), des étapes suivantes sont mises en oeuvre :
(5100) la détermination d'une première probabilité de consommation d'eau d'un utilisateur correspondant à une première période de temps, et la détermination d'une quantité de consommation d'eau cible selon la première probabilité de consommation d'eau ;
(S200) la détermination d'un premier paramètre de fonctionnement cible correspondant au chauffe-eau selon la quantité de consommation d'eau cible ; et
(S300) la commande du chauffe-eau pour fonctionner selon le premier paramètre de fonctionnement cible pendant et/ou avant la première période de temps,
**caractérisé en ce que**
l'étape de détermination d'une première quantité de consommation d'eau cible selon la première probabilité de consommation d'eau comprend :
la détermination d'un intervalle de probabilité dans lequel la première probabilité de consommation d'eau se situe, et la détermination d'un niveau de consommation d'eau actuel selon l'intervalle de probabilité, plus la première probabilité de consommation d'eau est grande, plus le niveau de consommation d'eau actuel est faible ; et
la détermination de la première quantité de consommation d'eau cible selon le niveau de consommation d'eau actuel,
et **en ce que**
l'étape de détermination de la première quantité de consommation d'eau selon le niveau de consommation d'eau actuel comprend :
après avoir déterminé que le niveau de consommation d'eau actuel est égal à un niveau prédéfini, la détermination d'un historique d'une quantité de consommation d'eau maximale de l'utilisateur dans les premières périodes de temps en tant que la première quantité de consommation d'eau cible ;
après avoir déterminé que le niveau de consommation d'eau actuel est inférieur au niveau prédéfini, la détermination d'une quantité de consommation d'eau maximale de l'utilisateur dans les premières périodes de temps dans une période de collecte de données cible en tant que la première quantité de consommation d'eau cible, dans lequel une probabilité de consommation d'eau des premières périodes de temps dans la période de collecte de données cible est supérieure à des probabilités de consommation de premières périodes de temps dans d'autres périodes de collecte de données ; et
après avoir déterminé que le niveau de consommation d'eau actuel est plus élevé que le niveau prédéfini, l'augmentation de la quantité de consommation d'eau d'un niveau de consommation d'eau cible de manière à être la première quantité de consommation d'eau cible, dans lequel le niveau de consommation d'eau cible est inférieur au niveau de consommation d'eau actuel d'un niveau.

13. Support de stockage lisible par ordinateur stockant un programme de commande de chauffage pour un chauffe-eau, lorsque le programme de commande de chauffage pour le chauffe-eau est exécuté par un processeur (101), des étapes suivantes sont mises en oeuvre :
(5100) la détermination d'une première probabilité de consommation d'eau d'un utilisateur correspondant à une première période de temps, et la détermination d'une quantité de consommation d'eau cible selon la première probabilité de consommation d'eau ;
(S200) la détermination d'un premier paramètre de fonctionnement cible correspondant au chauffe-eau selon la quantité de consommation d'eau cible ; et
(S300) la commande du chauffe-eau pour fonctionner selon le premier paramètre de fonctionnement cible pendant et/ou avant la première période de temps,
**caractérisé en ce que**
l'étape de détermination d'une première quantité de consommation d'eau cible selon la première probabilité de consommation d'eau comprend :
la détermination d'un intervalle de probabilité dans lequel la première probabilité de consommation d'eau se situe, et la détermination d'un niveau de consommation d'eau actuel selon l'intervalle de probabilité, plus la première probabilité de consommation d'eau est grande, plus le niveau de consommation d'eau actuel est faible ; et
la détermination de la première quantité de consommation d'eau cible selon le niveau de consommation d'eau actuel,
et **en ce que**
l'étape de détermination de la première quantité de consommation d'eau cible selon le niveau de consommation d'eau actuel comprend :
après avoir déterminé que le niveau de consommation d'eau actuel est égal à un niveau prédéfini, la détermination d'un historique d'une quantité de consommation d'eau maximale de l'utilisateur dans les premières périodes de temps en tant que la première quantité de consommation d'eau cible ;
après avoir déterminé que le niveau de consommation d'eau actuel est inférieur au niveau prédéfini, la détermination d'une quantité de consommation d'eau maximale de l'utilisateur dans les premières périodes de temps dans une période de collecte de données cible en tant que la première quantité de consommation d'eau cible, dans lequel une probabilité de consommation d'eau des premières périodes de temps dans la période de collecte de données cible est supérieure à des probabilités de consommation de premières périodes de temps dans d'autres périodes de collecte de données ; et
après avoir déterminé que le niveau de consommation d'eau actuel est plus élevé que le niveau prédéfini, l'augmentation de la quantité de consommation d'eau d'un niveau de consommation d'eau cible de manière à être la première quantité de consommation d'eau cible, dans lequel le niveau de consommation d'eau cible est inférieur au niveau de consommation d'eau actuel d'un niveau.
